(19) Europäisches Patentamt

European Patent Office

Office européen des brevets

(11) EP 0 481 259 B1

## (12) EUROPÄISCHE PATENTSCHRIFT

(45) Veröffentlichungstag und Bekanntmachung des Hinweises auf die Patenterteilung:
05.02.1997 Patentblatt 1997/06

(51) Int. Cl.$^6$: **B29C 49/56**, B29C 33/22

(21) Anmeldenummer: 91116386.3

(22) Anmeldetag: 26.09.1991

(54) **Verfahren und Vorrichtung zur Herstellung von Hohlkörpern aus thermoplastischem Kunststoff**

Method and apparatus for manufacture of hollow articles from thermoplastics material

Procédé et dispositif pour la fabrication de corps-creux en résine thermoplastique

(84) Benannte Vertragsstaaten:
AT BE CH DE DK ES FR GB GR IT LI LU NL SE

(30) Priorität: 15.10.1990 DE 4032659

(43) Veröffentlichungstag der Anmeldung:
22.04.1992 Patentblatt 1992/17

(73) Patentinhaber: **Krupp Kautex Maschinenbau GmbH**
**53229 Bonn (DE)**

(72) Erfinder:
• **Kiefer, Erich**
**W-5300 Bonn 3 (DE)**
• **Klüsener, Peter**
**W-5300 Bonn 2 (DE)**
• **Friedrichs, Karsten**
**W-5340 Bad Honnef (DE)**

(74) Vertreter: **Koepsell, Helmut, Dipl.-Ing.**
**Mittelstrasse 7**
**50672 Köln (DE)**

(56) Entgegenhaltungen:
| | |
|---|---|
| DE-A- 2 338 483 | FR-A- 2 460 771 |
| US-A- 3 749 541 | US-A- 3 767 341 |
| US-A- 3 883 286 | US-A- 4 150 080 |

EP 0 481 259 B1

## Beschreibung

Die Erfindung betrifft ein Verfahren und eine Vorrichtung zur Herstellung von Hohlkörpern aus thermoplastischem Kunststoff mittels Blasformen, wobei ein vorzugsweise schlauchförmiger Vorformling von einer wenigstens zwei Blasformteile aufweisenden Blasform aufgenommen und unter innerem Überdruck darin aufgeweitet wird und beide Teile der Blasform zwischen einem Offenzustand, in welchem sie einen Abstand voneinander aufweisen, und einem Schließzustand, in welchem sie aneinander anliegen und ein Formnest begrenzen, dessen Kontur der Gestalt des durch inneren Überdruck aufgeweiteten Vorformlings entspricht, durch wenigstens ein die Bewegungen zwischen diesen Zuständen bewirkendes Antriebssystem hin- und herbewegt werden.

Bei den Schließ- und Öffnungsbewegungen der Blasformteile ist es im allgemeinen erforderlich, daß diese Bewegungen bezüglich einer Bezugsebene des Grundrahmens der Blasformmaschine definiert und jederzeit reproduzierbar ablaufen. Üblicherweise wird dabei so verfahren, daß sich die Blasformteile symmetrisch auf die Mittelebene eines in der Mitte zwischen ihnen befindlichen Vorformlings hin- bzw. sich von dem daraus durch Aufweiten hergestellten Hohlkörper wegbewegen. Es wird daher im folgenden überwiegend die Mittelebene des im allgemeinen frei hängenden Vorformlings als Bezugsebene angenommen, wenngleich auch andere Bezugsebenen definiert werden können.

Insbesondere bei Verwendung eines hydraulischen Antriebssystems für die Schließ- und Öffnungsbewegungen der Blasformteile ist es aufgrund der Eigenschaften der dabei verwendeten Antriebsmittel ohne zusätzliche Vorkehrungen nicht möglich, den erwünschten Gleichlauf der Formteile bei den Schließ- und Öffnungsbewegungen bezüglich des Vorformlings zu erzielen, so daß die Gefahr besteht, daß die Formteile aufgrund unterschiedlicher Geschwindigkeiten ihren Öffnungs- oder Schließzustand jeweils in nicht definierbaren Positionen erreichen. Derartige Unregelmäßigkeiten bei den Bewegungen der Blasformteile sind im allgemeinen unerwünscht, zumal sie in unkontrollierbarer und somit von Arbeitszyklus zu Arbeitszyklus unterschiedlicher Weise auftreten können.

Zur Vermeidung solcher Unregelmäßigkeiten werden als zusätzliche Vorkehrung Gleichlaufeinrichtungen vorgesehen, die einen definierten Bewegungsablauf der Formteile relativ zu einer Bezugsebene des Grundrahmens bewirken. Im allgemeinen ist die Anordnung so getroffen, daß die Gleichlaufeinrichtung wenigstens ein mechanisches Verbindungselement aufweist, das nicht verschiebbar am Grundrahmen der Blasformmaschine angeordnet ist und durch welches die Blasformteile miteinander kinematisch gekoppelt sind. Aufgrund der festen Anordnung des Verbindungselements am Grundrahmen wird erreicht, daß die Schließ- und Öffnungsbewegungen der Blasformteile relativ zu der Mittelebene des Vorformlings bzw. des daraus hergestellten Artikels gleichartig entgegensetzt ablaufen. Dadurch wird mit einfachen Mitteln erreicht, daß die Formteile sich symmetrisch schließen und öffnen und somit ihren Schließzustand bzw. Offenzustand in definierten Positionen erreichen.

Bei einer bekannten Gleichlaufeinrichtung ist als Verbindungselement ein Zahnrad drehbar auf einer Achse angeordnet, die am Grundrahmen der Blasformmaschine fest angebracht ist. Die beiden Blasformteile weisen Zahnstangen auf, die mit dem Zahnrad kämmen. Bei einer Bewegung des einen Blasformteils wird das Zahnrad durch die entsprechende Zahnstange gedreht mit der Folge, daß das andere Blasformteil, dessen zugeordnete Zahnstange parallel zu der anderen Zahnstange auf der anderen Seite der Achse angeordnet ist, in die entgegengesetzte Richtung bewegt wird. Bei einer anderen Ausführungsform der Gleichlaufeinrichtung ist ein Steuerhebel schwenkbar um eine ortsfeste Achse am Grundrahmen gelagert. An den beiden gleich langen Hebelarmen sind Stangen verschwenkbar angeordnet, die mit ihrem anderen Ende beweglich an jeweils einem Blasformteil angebracht sind. Die Blasformteile sind über derartige Anordnungen kinematisch zwangsweise miteinander und mit dem Grundrahmen der Blasformmaschine gekoppelt. Es werden auch andere Gleichlaufeinrichtungen verwendet, die jedem Fachmann geläufig sind und keiner näheren Erläuterung bedürfen. Es kann sich dabei um z. B. um Gleichlaufeinrichtungen mit einem endlosen, flexiblen Element, z. B. einer Kette, einem Seil oder dgl. handeln, welches um zwei rotierbar, jedoch nicht verschiebbar am Maschinenrahmen angebrachte Räder, Rollen oder dgl. geführt ist. Allen Ausführungsformen ist jedoch gemeinsam, daß sie wenigstens ein Glied aufweisen, welches stationär, wenn auch rotierbar am Grundrahmen der Blasformmaschine angeordnet ist und somit eine Bezugsebene festlegt, relativ zu welcher die Bewegungen der Blasformteile symmetrisch entgegengesetzt ablaufen. Die Bezugsebene ist dabei im allgemeinen so gewählt, das sie mit der Mittelebene des Vorformlings zusammenfällt. In dieser Mittelebene wird häufig auch der Blasdorn angeordnet sein, der mit der Blasform und dem Vorformling zusammenwirkt und durch welchen i. a. das zum Aufweiten erforderliche Druckmedium in die Blasform geleitet wird.

Ein möglicher Aufbau einer solchen Blasformmaschine ergibt sich z. B. aus US-PS 4,150,080, deren Offenbarungsgehalt in diese Anmeldung einbezogen wird.

Insbesondere in der letzten Phase des Schließvorganges wird eine derartige symmetrische Bewegung der Formteile häufig erwünscht sein, da die beiden Blasformteile in dieser Phase den an einem Extrusionskopf oder an anderen geeigneten Haltemitteln hängenden Vorformling umfassen und das vorhandene Abfallmaterial in bekannter Weise abquetschen, wobei gleichzeitig die aneinanderliegenden Bereiche des Vorformlings miteinander verschweißt werden. In der Mehrzahl der Fälle wird der Vorformling, wenn er seine Aufnahmeposition einnimmt, in welcher er von der Blasform aufgenommen wird, am Extrusionskopf einer Extrusionsvorrichtung hängen. Es ist aber auch möglich, daß der Vorformling, der auch in anderer Weise als durch Extrudieren hergestellt sein kann, von einer anderen Halterung in seiner Aufnahmeposition gehalten wird, bis er von der Blasform aufgenommen worden ist.

Im Zuge der Ausweitung der Anwendung des Blasformverfahrens, insbesondere auch zur Herstellung von Hohlkörpern mit sehr komplizierter Gestalt, hat sich herausgestellt, daß die vorbeschriebenen üblichen, relativ zum Vorformling symmetrischen Bewegungen der Blasformteile nicht immer vorteilhaft sind, zumal die Blasform nicht in allen Fällen symmetrisch unterteilt ist mit der Folge, daß die Blasformteile unterschiedlich ausgestaltet sind. Es gibt daher Anwendungsmöglichkeiten, bei denen es zweckmäßiger, ggf. sogar erforderlich sein kann, Bewegungen der Blasformteile so durchzuführen, daß sie relativ zum Vorformling asymmetrisch ablaufen. Dies kann auch für die Öffnungsbewegungen der Blasformteile in Bezug auf den hergestellten Artikel gelten, der im allgemeinen von dem Blasdorn oder einem anderen mit der Blasform zusammenwirkenden Teil gehalten wird, welches an den Öffnungsbewegungen nicht teilnimmt.

Zwar ist aus der US-A-3749541 eine Vorrichtung zum Herstellen von Hohlkörpern aus thermoplastischem Kunststoff mittels Blasformen bekannt, bei welcher sowohl eine Verschiebung der Blasform als auch eine asymmetrische Bewegung der Blasformteile vorgesehen sind. Dies ist jedoch die zwangsläufige Folge der Tatsache, daß lediglich ein Antrieb zwecks Durchführung der Öffnungs- und Schließbewegungen der Blasformteile und der Verschiebung der Blasform zwischen zwei Stationen vorhanden ist. Dies bedeutet, daß die asymmetrischen Bewegungsabläufe der Blasformteile festliegen und nicht zur Anpassung an bestimmte Erfordernisse z.B. nach einem bestimmten Programm, welches veränderbar ist, ablaufen können.

Der Erfindung liegt daher die Aufgabe zugrunde, Verfahren und Vorrichtung der einleitend beschriebenen Art so auszugestalten, daß im Bedarfsfall auf einfache und jederzeit reproduzierbare Weise die Schließ- und auch die Öffnungsbewegungen der Blasformteile relativ zum Vorformling asymmetrisch und zudem zur Anpassung an bestimmte Erfordernisse, z.B. nach einem bestimmten Programm, welches veränderbar ist, ablaufen können, und zwar unter Einhaltung der für die Herstellung solcher Hohlkörper notwendigen Genauigkeit der Blasformteilbewegungen. Die dazu erforderlichen Mittel sollen einfach und wenig aufwendig sein.

Diese Aufgabe wird gelöst unter Anwendung der Verfahren bzw. Mittel, die in den unabhängigen Ansprüchen 1 und 7, bzw. 20 und 24 angegeben sind. In jedem Fall wird den jeweiligen Schließ- oder Öffnungsbewegungen der Blasformteile eine zusätzliche Bewegung überlagert mit der Folge, daß die Blasformteile sich mit unterschiedlichen Geschwindigkeiten und somit asymmetrisch relativ zu einer Bezugsebene des Grundrahmens der Blasformmaschine, also im allgemeinen auf den Vorformling hin- bzw. vom aufgeweiteten Hohlkörper wegbewegen. Die Verschiebung, die die Blasform in ihrer Gesamtheit erfährt, kann erfindungsgemäß in unterschiedlicher Weise erfolgen und hängt auch von dem die Schließ- und Öffnungsbewegungen bewirkenden Antriebssystem ab.

Die Antriebssysteme für die Bewegungen der Blasformteile können sich unter anderem durch die Art der Antriebsmittel oder durch den Aufbau der die Blasformteile tragenden Schließeinheit voneinander unterscheiden. So kann für die Blasformteile ein gemeinsames Antriebsmittel vorgesehen sein. Es ist auch möglich, jedem Blasformteil ein eigenes Antriebsmittel zuzuordnen. Als Antriebsmittel werden wegen der hohen aufzuwendenden Kräfte überwiegend hydraulische Kolben-Zylindereinheiten eingesetzt. Im folgenden wird daher, ohne daß dies eine Beschränkung darstellen soll, überwiegend von hydraulischen Kolben-Zylindereinheiten gesprochen, wobei es selbstverständlich ist, daß derartige Einheiten auch mehrere, parallel wirkende Hydraulikzylinder aufweisen können.

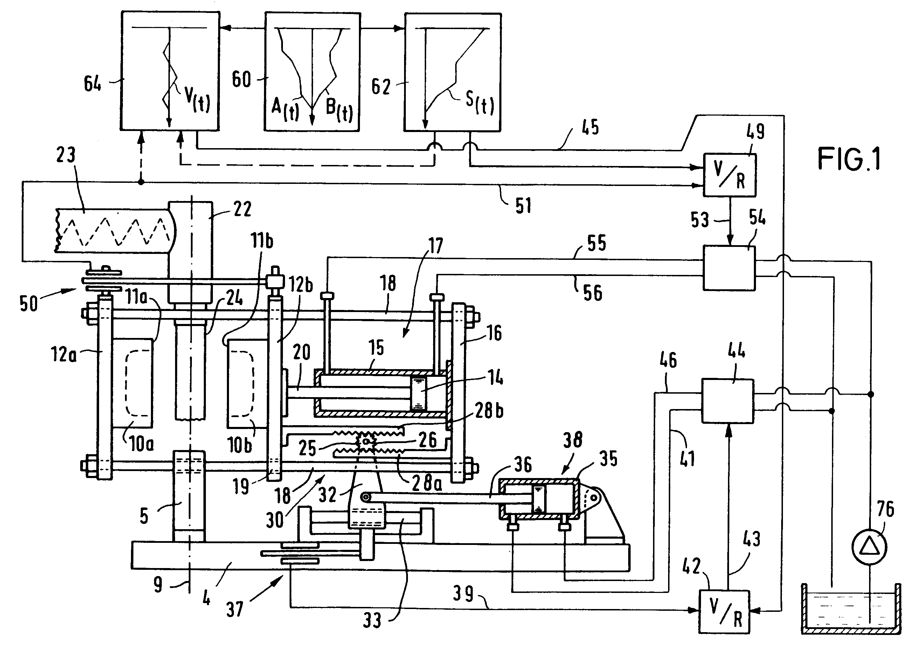

Bei einem sogenannten Dreiplatten-Schließgestell mit nur einem Antriebsmittel für die Schließ- und Öffnungsbewegungen der Blasformteile ist das gemeinsame Antriebsmittel zwischen einer ersten, ein Blasformteil tragenden Trägerplatte und einer zu dieser parallel verlaufenden Antriebsplatte angeordnet, welche durch Holme oder dgl. mit einer zweiten, auf der anderen Seite der ersten Trägerplatte liegenden Trägerplatte starr verbunden ist, welche das andere Blasformteil trägt (vgl. z. B. Fig. 1). Ein Betätigen des Antriebs z.B. in Schließrichtung bewirkt, daß, wenn ein am Grundrahmen der Blasformmaschine fest angeordnetes Gleichlaufelement der einleitend beschriebenen Art die Blasformteile oder deren Trägerplatten kinematisch miteinander verbindet, sich die Blasformteile symmetrisch auf den Vorformling hinbewegen, während sich die Antriebsplatte im Ausmaß der Bewegung der zweiten Trägerplatte vom Vorformling wegbewegt.

Die Verschiebung der Blasform kann erfindungsgemäß dadurch erfolgen, daß ein als kinematisches Verbindungselement wirkendes Glied der Gleichlaufeinrichtung am Grundrahmen, z.B. durch ein zusätzliches, unabhängiges Antriebssystem eine Verschiebung, also eine Änderung seiner Position, erfährt. Die Verschiebung des Verbindungselementes hat zur Folge, daß die gesamte bewegliche Einheit, die unter anderem die beiden Trägerplatten, die Antriebsplatte und das gemeinsame Antriebsmittel für die Schließ- und Öffnungsbewegungen aufweist, ebenfalls eine entsprechende Verschiebung erfährt.

Eine andere Möglichkeit besteht darin, daß wenigstens eines der Verbindungsglieder der Gleichlaufeinrichtung eine Änderung seiner wirksamen Länge erfährt, wobei dies durch ein zusätzliches, unabhängiges Antriebssystem erreicht werden kann. Dies hat ebenfalls die Wirkung, daß die Blasform in ihrer Gesamtheit eine Verschiebung erfährt.

Es wird somit den Schließ- und/oder Öffnungsbewegungen in beiden Fällen eine zusätzliche Bewegung überlagert mit dem Ergebnis, daß die aus der jeweiligen Öffnungs- oder Schließbewegung der Blasformteile zueinander und der Verschiebung der Blasform in ihrer Gesamtheit resultierenden Bewegungen der Blasformteile relativ zum Vorformling asymmetrisch ablaufen. Die Schließ- und/oder Öffnungsbewegung der Blasformteile relativ zueinander und das dafür verwendete Antriebsmittel werden durch diese Verschiebung der Blasform nicht beeinflußt. Durch diese zwei unabhängig voneinander ablaufenden Bewegungen, nämlich die Schließ- und/oder Öffnungsbewegung einerseits und die Verschiebung andererseits, wird erreicht, daß nahezu jeder Weg-Zeit-Verlauf bzw. Geschwindigkeit-Verlauf der Blasformteile bezüglich des Vorformlings realisiert werden kann. Durch die Trennung dieser beiden Bewegungen und die Unabhängigkeit der dafür verwendeten Antriebssysteme voneinander wird andererseits erreicht, daß die Kraft zum Schließen der Blasform und zum Abquetschen des Abfallmaterials und die Kraft, die benötigt wird, um die Blasform in geschlossenem Zustand zu halten, wenn der Vorformling unter innerem Überdruck aufgeweitet wird, von der Verschiebung unbeeinflußt bleiben.

Gemäß einem weiteren Vorschlag der Erfindung können der gewünschte Weg-Zeit-Verlauf und/oder Geschwindigkeit-Verlauf jedes Blasformteils bezüglich seiner Öffnungs- und/oder Schließbewegungen separat vorgegeben werden und die dafür benötigten Bewegungen des Antriebssystems, welches die Blasform schließt und öffnet, und des zusätzlichen Antriebssystems für die Verschiebung der Blasform in Abhängigkeit von diesen Weg-Zeit-Verläufen und/oder Geschwindigkeit-Zeit-Verläufen bestimmt werden. Dabei wird es zweckmäßig sein, für jedes Blasformteil ein Programm für den Weg-Zeit-Verlauf und/oder Geschwindigkeit-Verlauf vorzusehen, wobei es auch vorteilhaft sein kann, für die Schließbewegung und für die Öffnungsbewegung der Blasformteile jeweils ein separates Programm vorzusehen.

Aus den gewünschten Weg-Zeit-Verläufen und/oder den Geschwindigkeit-Verläufen der Blasformteile bezüglich des Vorformlings läßt sich in einfacher Weise der erforderliche Schließ- und Öffnungsweg-Zeit-Verlauf bestimmen, der ausschließlich von dem Antriebssystem für die Schließ- und Öffnungsbewegungen bewirkt wird, indem der Abstand-Zeit-Verlauf der Blasformteile zueinander errechnet wird. Der Abstand-Zeit-Verlauf ist die Vorgabe (Soll-Wert) für das die Schließ- und Öffnungsbewegungen bewirkende Antriebssystem.

Die für die gewünschte asymmetrische Bewegung der Blasformteile bezüglich der Mittelebene des Vorformlings erforderliche Verschiebung der Blasform in ihrer Gesamtheit kann erfindungsgemäß dadurch bestimmt werden, daß der Abstand der Mittelebene zwischen den Blasformteilen von der Mittelebene des Vorformlings oder einer anderen Bezugsebene des Grundrahmens ermittelt wird. Die Mittelebene zwischen den Blasformteilen entspricht dabei einer Ebene, welche in dem halben Abstand der Blasformteile zueinander, d.h. mittig zwischen den Blasformteilen verläuft und relativ zu welcher die Bewegungen der Blasformteile gleichartig entgegengesetzt, also symmetrisch ablaufen. Der sich daraus ergebende Abstand-Zeit-Verlauf der beiden Mittelebenen entspricht der erforderlichen Verschiebung der Blasform und ist die Vorgabe (Soll-Wert) für das die Verschiebung bewirkende zusätzliche Antriebssystem. Es ist dabei erforderlich, außer dem Ausmaß auch die Richtung der Verschiebung zu ermitteln, da die Verschiebung der Blasform in beiden Richtungen erfolgen kann.

Die asymmetrischen Bewegungen der Blasformteile lassen sich somit bei separater Vorgabe des Weg-Zeit-Verlaufs oder des Geschwindigkeit-Verlaufs der einzelnen Blasformteile durch die Überlagerung der Schließ- oder Öffnungsbewegungen und der Verschiebung der Blasform erreichen.

Ferner ist es möglich, das Antriebsmittel des die Verschiebung der Blasform bewirkenden Antriebssystems an einer anderen Stelle als an dem Verbindungselement der Gleichlaufeinrichtung angreifen zu lassen. Es kann z.B. zweckmäßig sein, das Antriebsmittel zwischen einem Blasformteil und dem Grundrahmen der Blasformmaschine anzuordnen. In diesem Fall muß das zusätzliche Antriebssystem einen Verschiebeweg-Zeit-Verlauf bewirken, der dem jeweiligen Weg-Zeit-Verlauf des Blasformteils, das mit dem zusätzlichen Antriebssystem verbunden ist, entspricht. Es ist dabei nicht erforderlich, daß ein Verbindungselement vorgesehen wird, das die Blasformteile kinematisch miteinander koppelt, da sich der relativ zur Bezugsebene vorgegebene Weg-Zeit-Verlauf desjenigen Blasformteils, das nicht mit dem zusätzlichen Antriebssystem verbunden ist, aus der Differenzbewegung zwischen der Schließ- und/oder Öffnungsbewegung der Blasformteile zueinander einerseits und dem durch das zusätzliche Antriebssystem bewirkten Bewegung des damit verbundenen Blasformteils andererseits ergibt. Falls ein Verbindungselement vorhanden ist, muß sich dieses bezüglich seiner Position oder Länge zur Anpassung an die gewünschten asymmetrischen Bewegungen der Blasformteile bezüglich des Vorformlings frei einstellen können.

Bei der Ausführungsform einer Blasformmaschine, die ein Antriebssystem aufweist, bei welchem für jedes Blasformteil ein separates Antriebsmittel vorgesehen ist, ist jeweils zwischen dem Grundrahmen und den die Blasformteile tragenden Trägerplatten eine Kolben-Zylindereinheit angeordnet. Durch die gemeinsame Beaufschlagung der Hydraulikzylinder mit hydraulischem Arbeitsmedium bewegen sich die Blasformteile auf den Vorformling zu oder von ihm weg, wobei im allgemeinen ebenfalls eine Gleichlaufeinrichtung der einleitend beschriebenen Art vorgesehen ist, um symmetrische Bewegungen der Blasformteile zum Vorformling zu erzeugen. Auch bei einer derartigen Blasformmaschine kann zur Erzielung der gewünschten asymmetrischen Bewegungen der Blasformteile zusätzlich die Blasform in ihrer Gesamtheit verschoben werden, indem z. B. das Verbindungselement eine Verschiebung erfährt. Eine Verschiebung der Blasform entspricht auch bei derartigen Blasformmaschinen einer Verschiebung oder Längenänderung der Gleichlaufeinrichtung mit einem Weg-Zeit-Verlauf, der dem Abstand der Mittelebene der Blasformteile zur Mittelebene des Vorformlings entspricht.

Durch die Verschiebung oder Längenänderung des Verbindungselementes werden die Trägerplatten der Blasformteile und die daran befestigten Teile der hydraulischen Kolben-Zylindereinheit ebenfalls verschoben. Dies ist möglich, da die Räume der Zylinder für die Öffnungs- und Schließbewegungen über das Leitungssystem für das hydraulische Medium miteinander verbunden sind. Es kann daher durch eine verhältnismäßig geringfügige Krafteinwirkung durch einen Stellantrieb, der z.B. ebenfalls als hydraulische Kolben-Zylinder-Einheit ausgebildet sein kann, eine Verschiebung der beide Trägerplatten in eine Richtung bewirkt werden. Bei derartigen Blasformmaschinen ist das Antriebssystem, das die Schließ- und Öffnungsbewegungen der Blasformteile bewirkt, nicht mehr völlig unbeteiligt an einer Verschiebung der Blasform, da die dadurch bewirkten asymmetrischen Bewegungen der Blasformteile relativ zur Bezugsebene Änderungen der zurückzulegenden Wege der Blasformteile und des mit ihnen jeweils verbundenen Antriebsmittels zur Folge haben. Eine Verschiebung der Blasform wird sich daher unmittelbar auf den jeweils auszuführenden Hub der hydraulischen Kolben- und Zylindereinheit der einzelnen Blasformteile auswirken. Es ist selbstverständlich, daß die Kolben-Zylinder-Einheiten einen maximalen Hub aufweisen, der derartige Verschiebungen ermöglicht.

Es ist zweckmäßig, auch bei einer Maschine mit einem Antriebsmittel für jedes Blasformteil so zu verfahren, daß für jedes Blasformteil ein separater Weg-Zeit-Verlauf und/oder Geschwindigkeit-Verlauf der Öffnungs- und/oder Schließbewegungen vorgegeben wird. Der sich daraus ergebende Abstand-Zeit-Verlauf und/oder Geschwindigkeit-Verlauf der Blasformteile zueinander stellt die Vorgabe (Soll-Wert) für das Antriebssystem dar, z. B. welche Menge hydraulischen Arbeitsmediums pro Zeiteinheit den Antriebsmitteln insgesamt zu- oder von ihnen abgeführt wird. Eine Verschiebung der Blasform hat zur Folge, daß während der Verschiebung ein Blasformteil und somit das zugeordnete Antriebsmittel schneller und das andere Blasformteil und das diesem zugeordnete Antriebsmittel im gleichen Ausmaß langsamer bewegt wird, wobei die relative Bewegung der Blasformteile zueinander unverändert bleibt. Es wird sich daher eine Verteilung des insgesamt zugeführten hydraulischen Volumenstroms auf die einzelnen Antriebsmittel einstellen und die Bewegungen der Blasformteile bewirken, die der gewünschten asymmetrischen Bewegung der Blasformteile relativ zu einer Bezugsebene entspricht. Sobald die Blasform keine Verschiebung mehr erfährt, erfolgt wieder eine gleichmäßige Verteilung des hydraulischen Arbeitsmediums auf die einzelnen Antriebsmittel.

Es ist auch bei einer derartigen Blasformmaschine mit einem Antriebsmittel für jedes Blasformteile möglich, das zusätzliche Antriebssystem direkt an einem Blasformteil oder an einer Trägerplatte angreifen zu lassen. Das zusätzliche Antriebssystem führt dabei die vorgegebenen Bewegungen des mit ihm verbundenen Blasformteils aus, so daß dessen Bewegungen bezüglich des Grundrahmens der Blasformmaschine festgelegt sind. Dem diesem Blasformteil zugeordneten Antriebsmittel wird daher soviel hydraulisches Arbeitsmedium zugeführt, daß das Blasformteil die durch das zusätzliche Antriebssystem aufgezwungene Bewegung bezüglich des Grundrahmens durchführen kann. Die Bewegung des anderen Blasformteils, welches nicht mit dem zusätzlichen Antriebsmittel verbunden ist, ergibt sich dann aus dem Hub des damit verbundenen Antriebsmittels aufgrund der diesem zugeführten Differenzmenge zwischen der insgesamt zugeführten und der Menge hydraulischen Arbeitsmediums, welche dem Antriebsmittel des Blasformteils, das mit dem zusätzlichen Antrieb verbunden ist, zugeführt wird. Es ist bei dieser Anordnung nicht erforderlich, eine Gleichlaufeinrichtung vorzusehen. Falls jedoch eine derartige Einrichtung vorhanden ist, muß diese außer Wirkung gebracht werden, z. B. frei verschiebbar oder bezüglich ihrer Länge frei einstellbar ausgebildet sein.

Entsprechend der vorstehenden Beschreibung hat eine Verschiebung der Blasform mittels eines zusätzlichen Antriebssystems bei einer Blasformmaschine mit einem Antriebsmittel für jedes Blasformteil zur Folge, daß die insgesamt zugeführte Menge hydraulischen Arbeitsmediums durch das zusätzliche Antriebssystem eine zwangsläufige Verteilung auf die einzelnen Antriebsmittel erfährt, wobei die Bewegung der Blasformteile zueinander unbeeinflußt bleibt.

Es besteht aber auch bei solchen Blasformmaschinen, die für jedes Blasformteil eine separate hydraulische Kolben-Zylindereinheit als Antriebsmittel aufweisen, gemäß einem weiteren Vorschlag der Erfindung die Möglichkeit, die für eine asymmetrische Bewegung der Blasformteile erforderliche Verschiebung der Blasform dadurch zu bewirken, daß das den Antriebsmitteln insgesamt zuzuführende hydraulische Arbeitsmedium durch geeignete Mittel entsprechend aufgeteilt wird, so daß die gewünschten asymmetrischen Bewegungen der Blasformteile relativ zur Bezugsebene bewirkt werden, wobei auch hier die Bewegungen der Blasformteile zueinander von der Verteilung unbeeinflußt bleiben. Die Erfindung schlägt daher vor, die insgesamt zugeführte Menge hydraulischen Arbeitsmediums, die von dem ermittelten Bewegungsablauf der Blasformteile zueinander bestimmt wird, in Abhängigkeit von dem Ausmaß der erforderlichen Verschiebung der Blasform auf die einzelnen Antriebsmittel zu verteilen, so daß sich die notwendige Verschiebung der Blasform einstellt, ohne daß ein zusätzliches Antriebssystem erforderlich ist. Wichtig ist dabei, daß die Aufteilung der Volumenströme erst nach der Bemessung des für die Schließ- und/oder Öffnungsbewegungen der Blasformteile zueinander insgesamt erforderlichen Volumenstroms hydraulischen Arbeitsmediums erfolgt, damit die Schließ- und/oder Öffnungsbewegungen der Blasformteile zueinander unbeeinflußt von der Verschiebung der Blasform bleiben.

Zweckmäßigerweise wird dabei so verfahren, daß an dem bezüglich Position oder Länge einstellbaren Verbindungselement der Gleichlaufeinrichtung ein Meßaufnehmer für den zurückgelegten Weg oder für die Geschwindigkeit angeordnet ist, der einen Wert für die Ist-Verschiebung der Blasform mißt. Wie einleitend beschrieben, entspricht die Verschiebung oder Längenänderung des Verbindungselementes der Verschiebung der Blasform relativ zum Grundrahmen der Blasformmaschine. Diese Ist-Verschiebung wird mit der Soll-Verschiebung, die aus dem Weg-Zeit-Verlauf des Abstands der Mittelebene zwischen den Blasformteilen von der Mittelebene des Vorformlings ermittelt wird und einer bestimmten Verteilung des hydraulischen Arbeitsmediums entspricht, verglichen, wobei in Abhängigkeit von einer auftretenden Abweichung die Verteilung der Menge des zugeführten Arbeitsmediums korrigiert wird.

Es kann auch zweckmäßig sein, einen Meßaufnehmer für den zurückgelegten Weg oder die Geschwindigkeit an einem Blasformteil anzuordnen, der die Ist-Bewegung dieses Blasformteils erfaßt. In Abhängigkeit von einer Abweichung des gemessenen Wertes von dem vorgegebenen Weg-Zeit-Verlauf und/oder Geschwindigkeit-Verlauf dieses Blasformteils wird die Verteilung des Arbeitsmediums korrigiert. In diesem Fall ist eine Gleichlaufeinrichtung, die sich frei einstellen kann, zur Ist-Wert-Erfassung nicht unbedingt erforderlich.

Theoretisch setzen sich die asymmetrischen Bewegungen der Blasformteile auch bei derartigen Blasformmaschinen aus einer Überlagerung der Schließ- oder Öffnungsbewegung mit der Verschiebung der Blasform zusammen. Die Schließ- oder Öffnungsbewegung der Blasformteile zueinander wird durch das insgesamt zugeführte hydraulische Arbeitsmedium realisiert unabhängig davon, wie es sich auf die einzelnen Antriebe verteilt. Eine ungleiche Verteilung entspricht dabei einer Erhöhung des zurückgelegten Weges des einen und eine Verringerung um das gleiche Ausmaß des zurückgelegten Weges des anderen Blasformteils. Diese Aufteilung der Wege entspricht jedoch einem Bewegungsablauf einer Verschiebung der beiden Blasformteile und somit der Blasform in eine Richtung.

Die hier beschriebenen Ausführungsformen der Erfindung haben demnach gemeinsam, daß die vorgegebenen asymmetrischen Bewegungen der Blasformteile bezüglich einer Bezugsebene des Grundrahmens sich aus der Schließ- oder Öffnungsbewegung der Blasformteile zueinander einerseits und einer überlagerten Verschiebung der Blasform in ihrer Gesamtheit andererseits zusammensetzen. Je nach Ausführungsform wird dabei ein zusätzliches Antriebssystem verwendet, welches an einem Blasformteil oder an einem Verbindungselement der Gleichlaufeinrichtung angreift und die für die vorgegebene zusätzliche Verschiebung der Blasform entsprechende Bewegung durchführt.

Bei den Ausführungsformen, bei welchen das zusätzliche Antriebsmittel an einem Blasformteil oder an einem anderen, dessen Bewegungen folgenden Element der Blasformvorrichtung angeordnet ist, ist die Verwendung einer Gleichlaufeinrichtung nicht zwingend erforderlich. Es ist jedoch besonders zweckmäßig, gemäß einem weiteren Vorschlag der Erfindung in jedem Fall eine Gleichlaufeinrichtung mit einem bezüglich seiner Position oder seiner Länge einstellbaren Verbindungselement vorzusehen, welches am Grundrahmen arretiert werden kann. Dann ist es auf einfache Weise möglich, durch Fixierung des Verbindungselementes zu erreichen, daß im Bedarfsfall wieder eine symmetrische Bewegung der Blasformteile z. B. zum Vorformling erfolgen kann. Dies kann insbesondere auch in der letzten Phase des Schließvorganges von Bedeutung sein, wenn die Blasformteile aneinander zur Anlage kommen und im allgemeinen einen Blasdorn umgreifen, durch welchen das Druckmedium zum Aufweiten des Vorformlings eingeleitet wird. Dabei ist es erforderlich, daß der Blasdorn keine unzulässigen einseitigen Belastungen und Verformungen erfährt. Er sollte eine zentrisch zur entsprechenden Öffnung der Blasform ausgerichtete Position einnehmen. Die Fixierung des Verbindungselementes kann auf einfache Weise unter Verwendung mechanischer Mittel geschehen, beispielsweise durch einen Bolzen oder ein anderes Element, welcher in der fixierten Position des Verbindungsgliedes oder eines damit verbundenen Teiles in eine dafür vorgesehene Ausnehmung an diesem Glied oder Teil einrastet.

Aus diesen Gründen kann es zweckmäßig sein, das Programm für den Weg-Zeit-Verlauf der Blasformteile während der Schließbewegung so auszubilden, daß es zwei Abschnitte aufweist, von denen der dem Ende der Schließphase zugeordnete Abschnitt zu Bewegungen führt, die die Erfordernisse zum Abquetschen und Verschweißen des Vorformlings erfüllen und, falls erforderlich, symmetrisch zu einem Bauelement der Blasform verlaufen, welches nicht an den Öffnungs- und Schließbewegungen teilnimmt. Dieser letzte Programmabschnitt soll dabei im wesentlichen unabhängig von den vorhergegangenen asymmetrischen Bewegungen der Blasformteile durchgeführt werden können. Es kann daher zweckmäßig sein, einen weiteren, der Überbrückung dienenden Programmabschnitt vorzusehen, der zwischen dem dem Ende der Schließphase zugeordneten Programmabschnitt und dem davorliegenden Abschnitt angeordnet ist, und in welchem die Bewegungen der Blasformteile berechnet werden, die erforderlich sind, um die Blasformteile von ihren Endpositionen des ersten Programmabschnitts zu ihren Startpositionen für den letzten Programmabschnitt zu verschieben.

Weiterhin wird durch die bezüglich ihrer Position oder ihrer Länge einstellbare und ggf. arretierbare Gleichlaufeinrichtung erreicht, daß in einfacher Weise die Bewegungen der Blasformteile zu unterschiedlichen Bezugsebenen symmetrisch ablaufen können, ohne daß es umständlicher Einstellungen der Blasform z.B. zum Extrusionskopf bedarf.

Weiterhin kann es zweckmäßig sein, in den ggf. an seinem freien Ende verschlossenen Vorformling Stützluft zu leiten um zu verhindern, daß die Innenflächen des schlauchförmigen Vorformlings aneinander zur Anlage kommen. Es kann aber auch zweckmäßig sein, daß darüber hinaus der Vorformling vor der Aufnahme durch die Blasform eine gewisse Aufweitung erfährt. Dies ist bei einer asymmetrischen Bewegung der Blasformteile relativ zum Vorformling deshalb wichtig, da nicht auszuschließen ist, daß ein Blasformteil den hängenden Vorformling berührt und verschwenkt derart, daß ohne Stützluft oder Voraufweitung der vorzugsweise schlauchförmige Vorformling zusammengedrückt würde. Im einzelnen stellen Einführung von Stützluft und Voraufweitung bekannte Maßnahmen dar, deren nähere Beschreibung nicht erforderlich ist.

Da bei Anwendung der Erfindung die Blasform in ihrer Gesamtheit relativ zu dem Gestell der Blasformmaschine verschiebbar ist, kann es erforderlich sein, Einrichtungen, die in einer vorgegebenen Position zu der Blasform angeordnet sind, z. B. die Einrichtung zum Zuführen der Blas- oder Stützluft, ebenfalls verschiebbar auszubilden. Dies kann z. B. dadurch erfolgen, daß derartige Einrichtungen fest mit einem der Blasformteile verbunden sind oder zusammen mit dem Verbindungselement verschoben werden.

Wenn in der Beschreibung und in den Ansprüchen von den Möglichkeiten des "Steuerns" oder des "Regelns" gesprochen wird, soll die jeweils andere Möglichkeit nicht ausgeschlossen sein.

Die Erfindung wird anhand einiger in der Zeichnung dargestellter, derzeit bevorzugter Ausführungsbeispiele erläutert. Es zeigen:

Fig. 1  im Schema eine Blasformmaschine mit einem gemeinsamen Antriebsmittel für die Schließ- und Öffnungsbewegungen der Blasformteile,

Fig. 2  im Schema eine mögliche Ausführungsform eines verschiebbaren, antreibbaren Verbindungselementes,

Fig. 3  im Schema eine andere Ausführungsform eines verschiebbaren antreibbaren Verbindungselementes,

Fig. 4  im Schema eine andere Ausführungsform einer Blasformmaschine mit gemeinsamem Antrieb für die Schließ- und Öffnungsbewegungen der Blasformteile,

Fig. 5  im Schema eine Blasformmaschine, bei welcher jedem Blasformteil ein Antriebsmittel zugeordnet ist,

Fig. 6  im Schema eine Blasformmaschine gemäß Fig. 5 in einer anderen Ausführungsform,

Fig. 7  im Schema eine Blasformmaschine gemäß Fig. 5 in einer weiteren Ausführungsform,

Fig. 8  im Schema eine Blasformmaschine, bei welcher ein Bauteil der Gleichlaufeinrichtung bezüglich seiner wirksamen Länge veränderbar ist,

Fig. 9  im Schema eine Modifikation der Maschine gemäß Fig. 8,

Fig. 10  im Schema eine weitere Modifikation der Maschine gemäß Fig. 8,

Fig. 11  im Schema einen Weg-Zeit-Verlauf der Blasformteile mit dem sich ergebenden Abstand-Zeit-Verlauf sowie dem Verschiebeweg-Zeit-Verlauf der Blasform beim Schließen der Blasform,

Fig. 12  im Schema einen anderen Weg-Zeit-Verlauf der Blasformteile mit dem sich ergebenden Abstand-Zeit-Ver lauf sowie dem Verschiebe-Zeit-Verlauf der Blasform beim Schließen der Blasform.

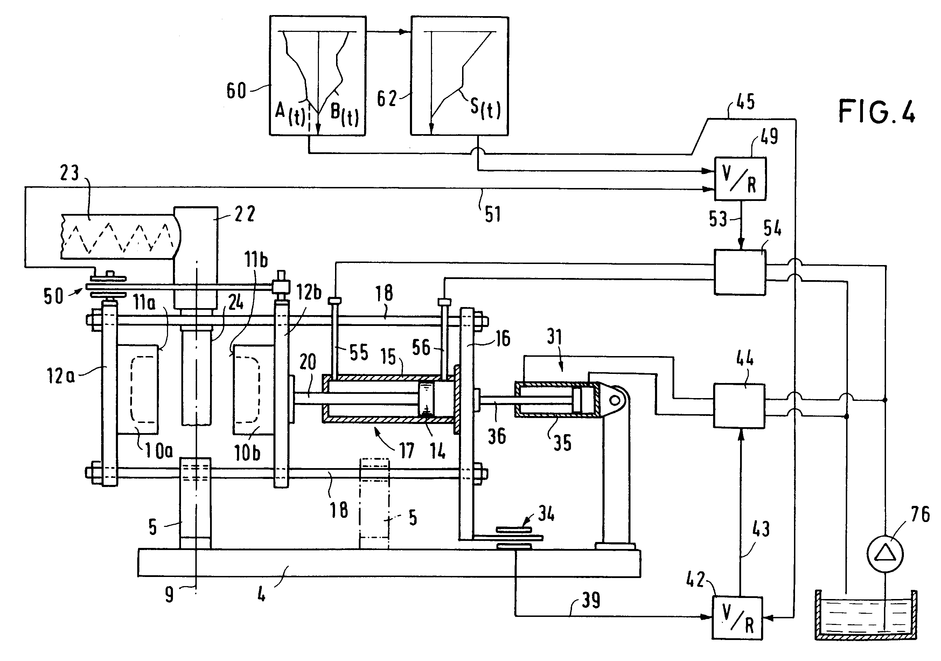

Bei den in den Fig. 1 und 4 dargestellten Ausführungsbeispielen ist für die Schließ- und Öffnungsbewegungen ein gemeinsames Antriebsmittel der Blasformteile vorgesehen. Das gemeinsame hydraulische Antriebsmittel 17 weist einen in einem Zylinder 15 verschiebbaren Kolben 14 auf, dessen Kolbenstange 20 mit einer Trägerplatte 12b verbunden ist, die das eine Blasformteil 10b trägt. Der Zylinder 15 ist an einer Antriebsplatte 16 angeordnet, die mittels Holmen 18, die durch Durchbrechungen und Führungen 19 der Trägerplatte 12b verlaufen, mit der anderen Trägerplatte 12a starr verbunden ist. Die Trägerplatte 12a ist auf der anderen Seite der Trägerplatte 12b angeordnet und trägt das Blasformteil 10a. Über Ständer 5, die entsprechende Führungen aufweisen, sind die Holme 18 und somit auch die Trägerplatte 12a und die Antriebsplatte 16 verschiebbar auf dem Grundrahmen 4 gelagert. Weitere Einzelheiten der Blasformmaschine sind aus Gründen der Übersichtlichkeit nicht dargestellt.

Zur Beeinflussung der Bewegungen der Blasformteile 10a, 10b relativ zum Vorformling weist die Blasformvorrichtung eine Gleichlaufeinrichtung 30 mit einem drehbar auf einer Achse 26 gelagerten Zahnrad 25 auf, das mit Zahnstangen 28a und 28b kämmt, die jeweils an der Antriebsplatte 16 bzw. an der Trägerplatte 12b angebracht sind. Es ist natürlich auch möglich, die Gleichlaufeinrichtung direkt zwischen den Trägerplatten 12a, 12b anzuordnen, so daß das Zahnrad mit Zahnstangen kämmt, die jeweils mit einer Trägerplatte verbunden sind. Bei beiden Anordnungen wird der gleiche Effekt erzielt. Die Achse 26 ist in einer Halterung 32 gelagert, die über Holme 33 parallel zu den Öffnungs- und Schließbewegungen der Blasformteile 10a, 10b bezüglich des Grundrahmens verschiebbar ist. Die Verschiebung wird durch ein zusätzliches als hydraulischer Hubkolben ausgebildetes Antriebsmittel 38 bewirkt, dessen Kolbenstange 36 mit der Halterung 32 und dessen Zylinder 35 mit dem Grundrahmen 4 verbunden ist.

Oberhalb der Blasformteile 10a, 10b ist der Extrusionskopf 22 einer Extrusionseinrichtung 23 angeordnet, aus welchem der im allgemeinen schlauchförmige Vorformling 24 in den Raum zwischen den beiden Blasformteilen 10a, 10b der dann offenen Blasform extrudiert wird. In Abhängigkeit von dem jeweils benutzten Extrusionskopf können die Vorformlinge kontinuierlich oder diskontinuierlich aus dem Extrusionskopf extrudiert werden. Dabei handelte es sich um bekannte Techniken, die keiner weiteren Erläuterung bedürfen.

Sobald ein Vorformling 24 eine für die Herstellung eines Hohlkörpers erforderliche Länge aufweist, wird er von der Blasform aufgenommen, indem die Blasformteile 10a, 10b aus ihrem in Fig. 1 der Zeichnung dargestellten Öffnungszustand durch das Antriebsmittel 17 in ihren Schließzustand bewegt werden, so daß die einander zugekehrten Begrenzungsflächen 11a, 11b aneinander anliegen und ein Formnest begrenzt wird, innerhalb dessen der Vorformling aufgeweitet wird. Bezogen auf die Darstellung der Fig. 1 bewirkt eine Betätigung des Antriebsmittels 17 in Schließrichtung, daß, bei feststehender Halterung 32 der Gleichlaufeinrichtung 30, die Trägerplatte 12b nach links und die Antriebsplatte 16 mit der Trägerplatte 12a im gleichen Ausmaß nach rechts bewegt wird, wobei sich die Blasformteile symmetrisch zu einer Bezugsebene des Grundrahmens 4, die im allgemeinen der Mittelebene 9 des Vorformlings 24 entspricht, bewegen. Im folgenden wird daher als Bezugsebene überwiegend die Mittelebene des Vorformlings angenommen, ohne daß damit eine Beschränkung verbunden sein soll.

Wenn das Zahnrad 25 der Gleichlaufeinrichtung seine in Fig. 1 dargestellte Position einnimmt, die im folgenden als "neutrale Position" bezeichnet wird, fällt die senkrecht zur Zeichnungsebene der Fig. 1 verlaufende Ebene, welche den jeweiligen Abstand zwischen den beiden Blasformteilen 10a, 10b hälftig unterteilt, mit der Mittelebene 9 des Vorformlings zusammen. Solange das Zahnrad 25 seine neutrale Position einnimmt, verlaufen die Öffnungs- und Schließbewegungen der Blasformteile 10a, 10b somit symmetrisch zur Mittelebene 9. Die Position des Zahnrades 25 der Gleichlaufeinrichtung 30 bestimmt somit die Position der den Abstand zwischen den beiden Blasformteilen 10a, 10b hälftig unterteilenden Ebene, die somit immer, also unabhängig von der absoluten Position dieser Ebene, in der Mitte zwischen den beiden Blasformteilen 10a, 10b oder, bei unsymmetrischer Ausbildung derselben, in der Mitte zwischen den beiden Trägerplatten 12a, 12b verläuft.

Zur Erzielung einer bezüglich der durch den Vorformling 24 definierten Mittelebene 9 asymmetrisch verlaufenden Bewegung der Blasformteile 10a, 10b ist es gemäß der Erfindung möglich, die Blasform über das Zahnrad 25, welches die kinematische Verbindung der Blasformteile 10a, 10b darstellt, durch das zusätzliche Antriebsmittel 38 zu verschieben. Dadurch wird der Öffnungs- bzw. Schließbewegung der Blasformteile 10a, 10b eine parallel zur Öffnungs- bzw. Schließbewegung verlaufende Bewegung überlagert mit der Folge, daß sich die Blasformteile bezüglich der Mittelebene 9 des Vorformlings asymmetrisch bewegen. Bezogen auf die Darstellung gemäß Fig. 1 bewirkt eine Verschiebung der Halterung 32 mit dem Zahnrad 25 aus dessen neutraler Position nach links eine schnellere resultierende Bewegung des Blasformteils 10b und eine entsprechend langsamere resultierende Bewegung des Blasformteils 10a. Eine Verschiebung des Zahnrades 25 aus seiner neutralen Position nach rechts hat die gegenteiligen Wirkungen zur Folge.

Diese Verschiebung der Blasform ist dabei völlig unabhängig von den durch das gemeinsame Antriebsmittel 17 bewirkten Öffnungs- und Schließbewegungen der Blasformteile, so daß die Verschiebung z. B. auch dann durchgeführt werden kann, wenn die Blasformteile keine Bewegung relativ zueinander erfahren oder sich in ihrem Schließ- oder Öffnungszustand befinden.

Zur Regelung des Arbeitsablaufs der Blasformmaschine, insbesondere des Bewegungsablaufs der Blasformteile, ist ein Weg-Zeit-Programmgeber 60 vorgesehen, in welchen die gewünschten Weg-Zeit-Verläufe und/oder Geschwindigkeit-Verläufe der Blasformteile 10a, 10b z. B. bezüglich der Mittelebene 9 des Vorformlings eingegeben werden. D. h., daß der Weg, der von jeweils einem der Blasformteile zurückgelegt wird, über der Zeit und/oder die Geschwindigkeit, mit welcher der Weg zurückgelegt wird, im Programmgeber 60 eingegeben ist. Der Programmgeber 60 steht in Verbindung mit einer Recheneinheit 62, die aus den in dem Programmgeber 60 eingegebenen Werten und den sich daraus ergebenden Soll-Bewegungen der Blasformteile den Soll-Abstand der Blasformteile 10a, 10b voneinander und/oder deren Soll-Geschwindigkeit relativ zueinander errechnet und einer Vergleichs- und Regeleinrichtung 49 als Soll-Wert vorgibt. Diese Einrichtung 49 steuert über die Signalleitung 53 ein Ventil 54, das über die Leitungen 55, 56 mit dem Zylinder 15 des gemeinsamen Antriebssystems 17 verbunden ist und durch welches der von einer Pumpe 76 zum Zylinder 15 geförderte oder von diesem zurückgeführte Volumenstrom des hydraulischen Arbeitsmediums, der der Schließ- und/oder Öffnungsbewegung der Blasformteile entspricht, eingestellt wird. Über einen Meßaufnehmer 50, der mit den Blasformteilen 10a, 10b zusammenwirkt, wird der tatsächliche Abstand der Blasformteile 10a, 10b erfaßt und über die Signalleitung 51 der Vergleichs- und Regeleinrichtung 49 zugeführt, die bei Abweichung des Ist-Wertes von dem Soll-Wert die Stellung des Ventils 54 entsprechend korrigiert.

Allgemein gilt, daß die direkte Erfassung des Abstandes der Blasformteile bzw. der ihnen zugeordneten Trägerplatten günstiger ist als die getrennte Erfassung der Wege der Blasformteile bzw. deren zugeordneten Trägerplatten relativ zum Grundrahmen und die Berechnung des Abstandes aus den Wegen. Im letzten Fall können elastische Verformungen der die Schließkräfte aufnehmenden Teile der Maschine zu ungenauen Ergebnissen führen.

Außerdem steht der Programmgeber 60 mit einer Recheneinheit 64 in Verbindung, in welcher der Soll-Abstand der Mittelebene der Blasformteile zur Mittelebene 9 des Vorformlings 24 errechnet wird. Relativ zur erstgenannten Mittelebene, die in dem halben Abstand der Blasformteile voneinander, d.h. mittig zwischen diesen, verläuft, erfolgen die Bewegungen der Blasformteile symmetrisch, also entgegengesetzt. Der Abstand-Zeit-Verlauf der beiden Mittelebenen zueinander entspricht dem Soll-Wert der überlagernden Verschiebung und wird von der Recheneinheit 64 über eine Leitung 45 einer Vergleichs- und Regeleinheit 42 vorgegeben, die über die Signalleitung 43 ein Ventil 44 steuert, das über die Leitungen 46, 41 den zur Verschiebung erforderlichen Volumenstrom hydraulischen Arbeitsmediums dem Antriebsmittel 38 zuführt. Die tatsächliche Lage (Ist-Wert) des Zahnrades 25 wird durch einen Wegaufnehmer 37 erfaßt, der mit der Halterung 32 zusammenwirkt. Über die Signalleitung 39 steht der Wegaufnehmer 37 mit der Vergleichs- und Regeleinheit 42 in Verbindung, die in Abhängigkeit von einer Abweichung des Ist-Wertes von dem durch die Recheneinheit 64 vorgegebenen Soll-Wert die Stellung des Ventils 44 korrigiert. Die Achse 26 des Zahnrades 25 weist immer den gleichen Abstand zur Mittelebene der Blasformteile auf, so daß der ermittelte Abstand zwischen Mittelebene der Blasformteile und der Mittelebene 9 des Vorformlings 24 der erforderlichen Verschiebung der Blasform und somit des Zahnrades 25 bezüglich des Grundrahmens entspricht.

Es kann zweckmäßig sein, die Recheneinheiten 62 und 64 miteinander zu koppeln und/oder das Programm für die Verschiebung der Blasform in Abhängigkeit von dem tatsächlichen Abstand der Blasformteile voneinander ablaufen zu lassen, um einen synchronen Programmablauf der Schließ- und/oder Öffnungsbewegung der Blasformteile einerseits und der Verschiebung der Blasform andererseits zu gewährleisten. Diese Möglichkeit der Ausführung ist in den Zeichnungen durch gestrichelte Signalleitungen zwischen den betreffenden Einrichtungen dargestellt.

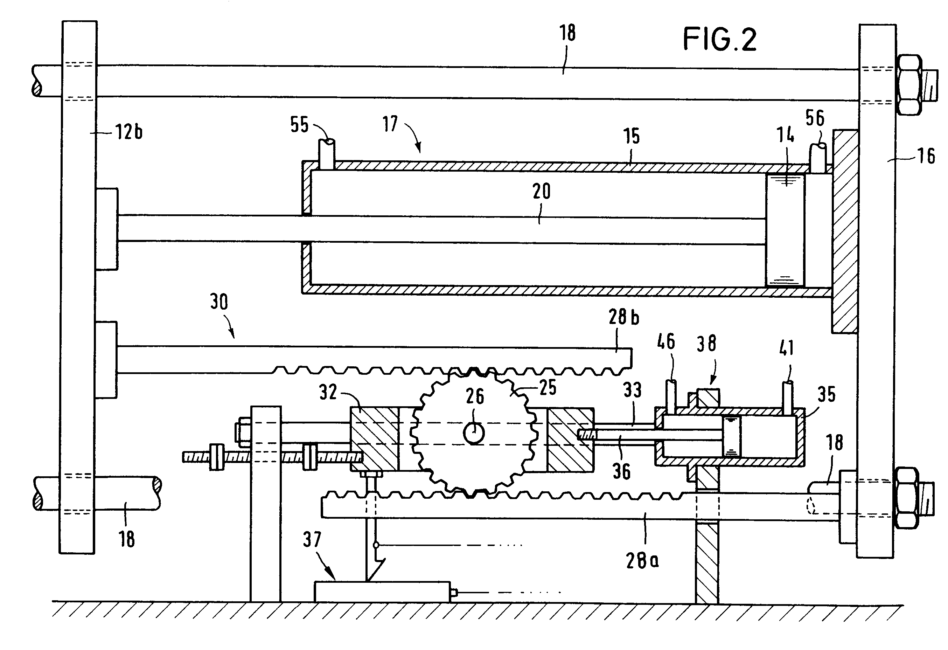

In Fig. 2 ist die verschiebbare Gleichlaufeinrichtung in einem größeren Maßstab als in Fig. 1 dargestellt.

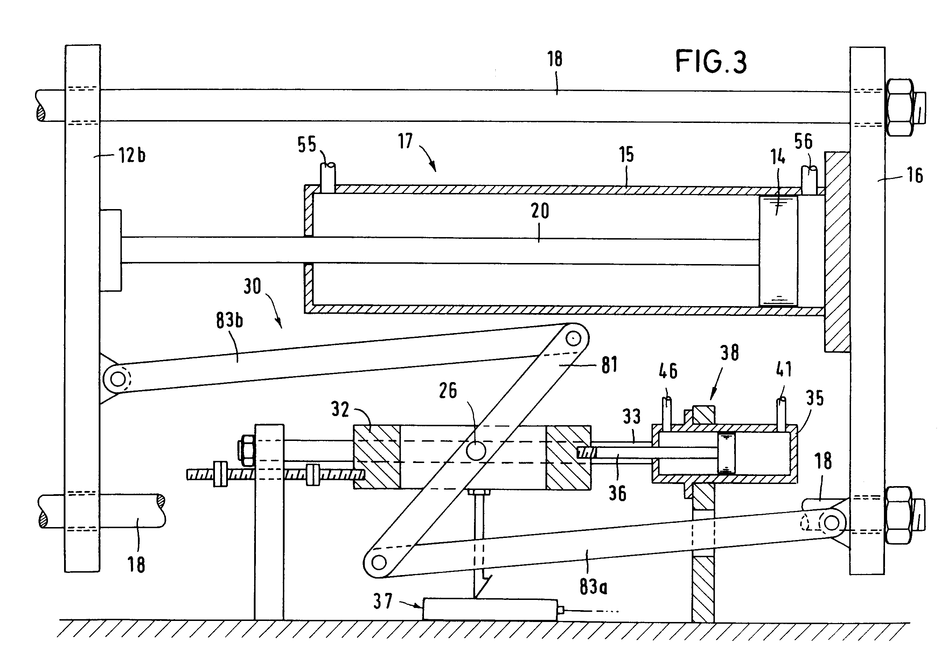

Fig. 3 zeigt eine andere Ausführungsform einer verschiebbaren Gleichlaufeinrichtung 30. Anstelle eines mit Zahnstangen kämmenden Zahnrades weist diese Ausführungsform einen Steuerhebel 81 auf, der auf der Achse 26 der verschiebbaren Halterung 32 verschwenkbar angeordnet ist. Im jeweils gleichen Abstand zur Verschwenkachse 26 sind an den gegenüberliegenden Enden des Steuerhebels 81 Hebelstangen 83a und 83b gelenkig angeordnet, die mit der Antriebsplatte 16 bzw. der Trägerplatte 12b in Verbindung stehen. Durch diese Anordnung wird ebenfalls erreicht, daß sich Trägerplatte und Antriebsplatte 16 wie bei der Verwendung eines mit Zahnstangen kämmenden Zahnrads symmetrisch zur Achse 26 bewegen.

Das Ausführungsbeispiel gemäß Fig. 4 unterscheidet sich von jenem gemäß Fig. 1 insbesondere dadurch, daß das zusätzliche Antriebsmittel 31 zwischen dem Grundrahmen und der Antriebsplatte 16 angeordnet ist, so daß die Kolbenstange 36 des am Grundrahmen angebrachten Zylinders 35 direkt an der Antriebsplatte 16 angreift. Diese Anordnung hat zur Folge, daß die Bewegungen des im Zylinder 35 geführten Kolbens direkt auf die Antriebsplatte 16 und Trägerplatte 12a aufweisende Einheit übertragen werden. Die Bewegungen dieser Einheit 16, 12a laufen daher synchron mit denen des im Zylinder 35 geführten Kolbens ab. Letzteres gilt auch für die Trägerplatte 12b und somit für das von dieser getragene Blasformteil 10b, solange Kolben 14 und Zylinder 15 des gemeinsamen Antriebsmittels 17 für die Öffnungs- und Schließbewegungen keine Bewegung zueinander ausführen. Bei Betätigung des gemeinsamen Antriebsmittels 17 hingegen führt die Trägerplatte 12b mit dem Blasformteil 10b eine resultierende Bewegung aus, die sich aus den Bewegungskomponenten des zusätzlichen Antriebsmittels 31 und des gemeinsamen Antriebsmittels 17 zusammensetzt. Die Anordnung des gemeinsamen Antriebsmittels 17 für Öffnungs- und Schließbewegungen der Blasformteile sowie dessen Regelung entsprechen der Ausführung gemäß Fig. 1. Da nunmehr das zusätzliche Antriebsmittel 31 an der Antriebsplatte 16 angreift und somit dessen Bewegungen und die der Trägerplatte 12a direkt bewirkt, wird von dem Programmgeber 60, in welchem die Weg-Zeit-Verläufe der einzelnen Blasformteile gespeichert sind, über die Signalleitung 45 der Vergleichs- und Regeleinheit 42 der Weg-Zeit-Verlauf des Blasformteils 10a dem Antriebsmittel 31 als Soll-Wert vorgegeben.

Es ist natürlich auch möglich, das zusätzliche Antriebsmittel 31 direkt an einer der Trägerplatten 12a oder 12b angreifen zu lassen. Dabei würde der Programmgeber 60 dem Regler 42 den Weg-Zeit-Verlauf des mit dem zusätzlichen Antriebsmittel 31 verbundenen Blasformteiles 10a oder 10b vorgeben.

Die Vergleichs- und Regeleinheit 42 steuert über die Signalleitung 43 das Ventil 44, welches den für die Verschiebung der Antriebsplatte 16 erforderlichen Volumenstrom hydraulischen Arbeitsmediums bestimmt. Die Verschiebung der Antriebsplatte bewirkt aufgrund der starren Verbindung durch die Holme 18 mit der Trägerplatte 12a eine entsprechende Bewegung des Blasformteils 10a. Durch einen Wegaufnehmer 34 wird die tatsächliche Position der Antriebsplatte 16 erfaßt und dem Regler 42 über die Signalleitung 39 als Ist-Wert eingegeben. In Abhängigkeit von einer Abweichung zwischen diesem Ist-Wert und dem durch den Programmgeber 60 vorgegebenen Soll-Wert der Bewegung des Blasformteils 10a korrigiert die Vergleichs- und Regeleinheit 42 ggf. die Stellung des Ventils 44.

Wie aus Fig. 4 ersichtlich, ist bei einer Ausführungsform, bei welcher das zusätzliche Antriebsmittel 31 direkt an einem Bauteil angreift, an welchem eines der Blasformteile angebracht ist, keine Gleichlaufeinrichtung vorgesehen, da die jeweilige Lage der Halteplatte 12a und Antriebsplatte 16 aufweisenden Einheit durch den zusätzlichen Antrieb 31 festgelegt ist. Somit ist auch die Lage des Zylinders 15 des gemeinsamen Antriebs 17 festgelegt. Damit ist auch die Bewegung des Kolbens 14 relativ zum Grundrahmen definiert und damit auch die des Blasformteils 10b. Die Recheneinheit 64 der Fig. 1 kann daher bei einer derartigen Ausführungsform entfallen, zumal bei dieser Ausführungsform nicht die Möglichkeit vorgesehen ist, die Ist-Position der Mittelebene zwischen beiden Blasformteilen 10a, 10b festzustellen. .

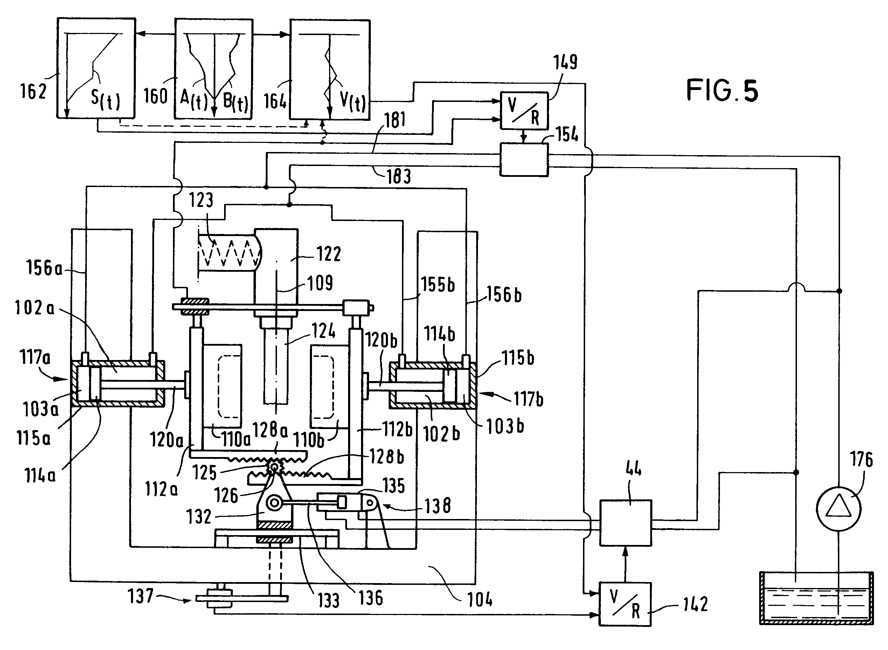

In den Fig. 5 - 7 sind Ausführungsbeispiele von Blasformvorrichtungen dargestellt, bei welchen Antriebssysteme vorgesehen sind, die für jedes Blasformteil ein separates Antriebsmittel aufweisen, wobei jedoch im übrigen weitgehende Übereinstimmung mit dem Ausführungsbeispiel gemäß Fig. 1 besteht. Somit sind in den Fig. 5 - 7 jeweils gleiche Teile mit gleichen, gegenüber denen der Fig. 1 - 4 um 100 höheren Bezugszeichen versehen.

Die Blasformmaschine gemäß Fig. 5 weist zwei Blasformteile 110a, 110b auf, die auf Trägerplatten 112a, 112b angeordnet sind. An den Trägerplatten 112a, 112b greift jeweils eine Kolbenstange 120a bzw. 120b eines einen Hubkolben 114a bzw. 114b aufweisenden Antriebsmittels 117a bzw. 117b an, die am Rahmen 104 gelagert sind. Zur Beeinflussung der Bewegungen der Blasformteile 110a, 110b ist, wie beim Ausführungsbeispiel gemäß Fig. 1, ein Zahnrad 125 drehbar auf einer Achse 126 vorgesehen, welches mit zwei Zahnstangen 128a, 128b kämmt, die jeweils mit einer Trägerplatte 112a bzw. 112b verbunden sind. Die Halterung 132, auf welchem das Zahnrad 125 angeordnet ist, kann über ein zusätzliches Antriebsmittel 138 am Grundrahmen parallel zu den Öffnungs- und Schließbewegungen der Blasformteile verschoben werden.

Die Regeleinrichtung zum Regeln des Bewegungsablaufs der Blasformteile entspricht weitgehend der Regeleinrichtung gemäß Fig. 1. Da jeweils ein separates Antriebsmittel 117a, 117b vorhanden ist, wird das zuzuführende hydraulische Arbeitsmedium in Strömungsrichtung hinter dem für die Bemessung der für die vorgegebenen Bewegungen der Blasformteile 110a, 110b erforderlichen Menge hydraulischen Arbeitsmediums vorgesehenen Ventil 154 in zwei Teilströme 156a, 156b unterteilt. Das aus den Zylindern 115a, 115b verdrängte hydraulische Arbeitsmedium wird in Strömungsrichtung vor dem Ventil 154 zusammengeführt. Die hydraulischen Antriebsmittel 117a, 117b stehen demnach über die Leitungen 155a, 155b und 156a, 156b derart miteinander in Verbindung, daß jeweils der Raum 102a vor dem Kolben 114a mit dem Raum 102b vor dem Kolben 114b und der Raum 103a hinter dem Kolben 114a mit dem Raum 103b hinter dem Kolben 114b des jeweiligen Hubzylinders 115a, 115b verbunden ist.

Bei einer Beaufschlagung der Antriebsmittel in Schließrichtung wird die für die vorgegebene Schließbewegung der Blasformteile erforderliche Gesamtmenge hydraulischen Arbeitsmediums von dem Ventil 154 eingestellt und über die Leitung 181 und die Zweigleitungen 156a, 156b unter Druck in die Räume 103a, 103b der jeweiligen Antriebsmittel 117a, 117b geführt, während gleichzeitig das hydraulische Arbeitsmedium aus den Räumen 102a, 102b der Antriebsmittel über die Zweigleitungen 155a, 155b und die Sammelleitung 183 abgeführt wird. Bei feststehender Halterung 132 des Zahnrades 125 wird aufgrund der dadurch erzwungenen symmetrischen Bewegungen der Blasformteile die insgesamt zugeführte Menge des hydraulischen Arbeitsmediums gleichmäßig auf die Antriebsmittel 117a, 117b verteilt.

Eine Verschiebung der Halterung 132 bezogen auf die Darstellung in Fig. 5 nach rechts bewirkt hingegen einen größeren Widerstand für das hydraulische Arbeitsmedium, das durch die Leitung 156b strömt, so daß sich eine von der gleichmäßigen Verteilung abweichende Verteilung des insgesamt zugeführten hydraulischen Arbeitsmediums einstellen wird. Entsprechend dem Ausmaß der Verschiebung erhält das Antriebsmittel 117a mehr hydraulisches Arbeitsmedium, während das Antriebsmittel 117b entsprechend weniger erhält, so daß der eine Kolben 114a entsprechend der mehr zugeleiteten Menge hydraulischen Arbeitsmediums einen zusatzlichen, der andere Kolben 114b entsprechend der weniger zugeführten Menge einen um den zusätzlichen Weg des Kolbens 114a verringerten, kürzeren Weg durchläuft mit der Wirkung, daß die beiden Blasformteile 110a, 110b und somit die Blasform unabhängig von der sich fortsetzenden Schließbewegung der Blasformteile 110a, 110b zueinander eine Verschiebung in Richtung der Verschiebung der Halterung 132 erfahren. Da die Räume 102a, 102b und die Räume 103a, 103b ein in sich geschlossenes System bilden, ist eine derartige Verschiebung auch durch ein Antriebsmittel 138 erreichbar, das nur eine wesentlich geringere Kraft als die beiden Antriebsmittel 117a, 117b aufbringen kann, da nur aus der Verschiebung sich ergebende Widerstände überwunden werden müssen.

Es ist natürlich auch möglich, eine Verschiebung der Blasform während des Öffnens zu bewirken. In diesem Fall wird das hydraulische Arbeitsmedium den Räumen 102a, 102b zugeführt, wobei es ggf. eine Verteilung entsprechend der Verschiebung des Zahnrades 125 erfährt.

Sobald die Halterung 132 keine Verschiebung erfährt, erfolgt wieder eine gleichmäßige Verteilung des hydraulischen Arbeitsmediums unabhängig davon, ob die Halterung 132 ihre ursprüngliche, mittige Stellung oder eine beliebige andere Stellung eingenommen hat.

Da beim Ausführungsbeispiel gemäß Fig. 5 - abweichend von dem der Fig. 1 - die Gleichlaufeinrichtung in dem Bereich zwischen beiden Trägerplatten 112a, 112b angeordnet ist, definiert die Position des Zahnrades 125 auch direkt die Position der den Abstand zwischen beiden Blasformteilen 110a, 110b hälftig unterteilenden Mittelebene. D.h., daß die Achse 126 jeweils in dieser Mittelebene positioniert ist. In Fig. 5 nimmt das Zahnrad 125 seine neutrale Position ein. D.h., daß die vorerwähnte Mittelebene der Blasformteile mit der durch den Vorformling 124 definierten Mittelebene 109 zusammenfällt.

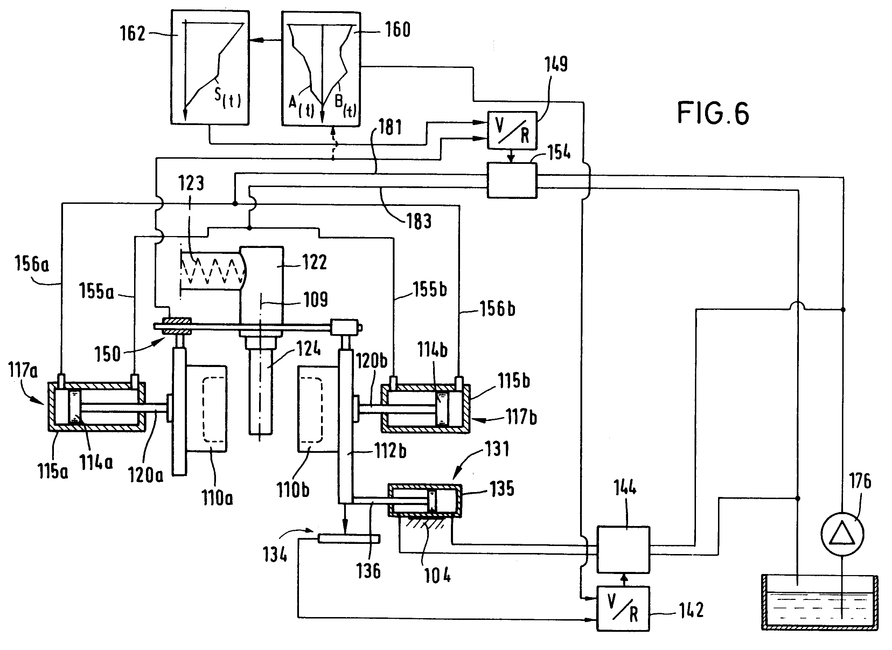

Das in Fig. 6 gezeigte Ausführungsbeispiel entspricht dem der Fig. 5, wobei jedoch die Verschiebung der Blasform durch ein zusätzliches Antriebsmittel 131 bewirkt wird, das zwischen dem hier nicht dargestellten Grundrahmen 104 und der Trägerplatte 112b angeordnet ist. Das zusätzliche Antriebsmittel 131 muß demnach den durch den Programmgeber 160 vorgegebenen Weg-Zeit-Verlauf des Blasformteils 110b durchfahren. Die für dieses Antriebsmittel 131 vorgesehene Regelelemente entsprechen daher denen der Blasformvorrichtung gemäß Fig. 4. Wenn beispielsweise gemäß dem im Programmgeber 160 gespeicherten Programm das Blasformteil 110b beim Schließen eine langsamere Bewegung relativ zur Mittelebene 109 des Vorformlings 124 ausführen soll, erfolgt eine derartige Beaufschlagung des zusätzlichen Antriebsmittels 131, daß die Trägerplatte 112b die ihr vom Programm zugeordnete Bewegung ausführt. Dies hat zur Folge, daß das über die Sammelleitung 181 insgesamt zugeführte Arbeitsmedium eine Verteilung erfährt, bei welcher dem Antriebsmittel 117a mehr, dem Antriebsmittel 117b entsprechend weniger hydraulisches Arbeitsmedium zugeführt wird, so daß die Antriebsmittel 117a, 117b und die Blasformteile die gewünschte asymmetrische Bewegung bezüglich der Bezugsebene 109 durchführen.

Wichtig ist bei beiden Ausführungsformen, daß die Verzweigungen der Sammelleitungen 181, 183 zu den Zweigleitungen 155a, 155b und 156a, 156b erst nach dem Ventil 154 erfolgen, durch welches der für die vorgegebenen Bewegungen der Blasformteile in Schließrichtung oder Öffnungsrichtung erforderliche Volumenstrom des hydraulischen Arbeitsmediums eingestellt wird. Unzweckmäßig wäre eine Anordnung, bei welcher für jedes der beiden Antriebsmittel 117a, 117b ein eigenes Ventil analog dem Ventil 154 und/oder ein eigener Regelkreis vorgesehen sind, da dabei insbesondere in der letzten Phase des Schließvorganges, innerhalb welcher erhöhte Kräfte, z. B. zum Abquetschen von Abfallmaterial, aufgebracht werden müssen, eine Koordinierung beider Regelkreise zur Bezugsebene nicht oder nur mit außerordentlich großem Aufwand erreichbar wäre, weil keine eindeutige Trennung der Funktionen zwischen Öffnen und Schließen der Blasform einerseits und Verschieben der Blasform andererseits möglich ist.

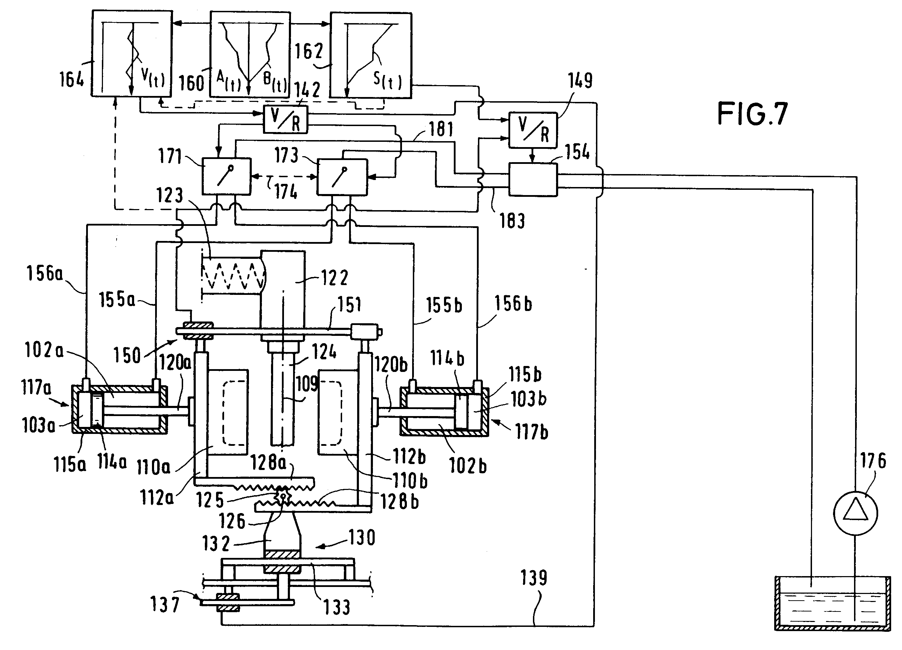

In Fig. 7 ist eine weitere Möglichkeit dargestellt, die Verschiebung der Blasform zusätzlich zu den Öffnungs- und Schließbewegungen der Blasformteile 110a, 110b bei einer Blasformmaschine zu bewirken, die für jedes Blasformteil ein separates hydraulisches Antriebsmittel aufweist. Wie vorstehend bereits erläutert, bewirkt bei einer derartigen Blasformvorrichtung die Verschiebung des Verbindungselementes der Gleichlaufeinrichtung oder die erzwungene Durchführung des Weg-Zeit-Verlaufes eines Blasformteils durch ein zusätzliches Antriebsmittel, daß die insgesamt zugeführte Menge hydraulischen Arbeitsmediums eine ungleiche Verteilung derart erfährt, daß die jeweils einem Antriebsmittel zugeführte Menge hydraulischen Arbeitsmediums der vorgegebenen Bewegung des jeweiligen Blasformteils gemäß dem im Programmierer 160 eingegebenen Wert entspricht. Die vorgegebenen Bewegungen der Blasformteile zueinander werden durch die insgesamt zugeführte Menge hydraulischen Arbeitsmediums entsprechend dem durch die Recheneinheit 162 ermittelten Soll-Wert bewirkt, wobei die Menge durch das Ventil 154 vor der Aufteilung in die Zweigleitungen 155a, 155b, 156a, 156b bemessen wird. Im Hinblick auf die Tatsache, daß das hydraulische Arbeitsmedium ohnehin eine Verteilung erfahren muß, wird bei der Ausführungsform gemäß Fig. 7 die Verteilung des Arbeitsmediums nicht zwangsweise durch eine auf wenigstens eine der Blasformteile zusätzlich einwirkende Kraft, sondern durch eine Verteileinrichtung bewirkt.

Dazu ist, wie bei der Ausführungsform der Fig. 5, ein Programmgeber 160 vorgesehen, in welchen die Weg-Zeit-Verläufe oder Geschwindigkeit-Verläufe für jedes Blasformteil 110a, 110b relativ zu z.B. der Mittelebene 109 des Vorformlings eingegeben werden. Der sich daraus ergebende Abstand-Zeit-Verlauf oder Geschwindigkeit-Verlauf der Blasformteile relativ zueinander wird in der Recheneinheit 162 ermittelt und einer Vergleichs- und Regeleinrichtung 149 vorgegeben, die das Ventil 154 steuert, durch welches die für die jeweils vorgegebene Bewegung die erforderliche Menge hydraulischen Arbeitsmediums eingestellt wird.

Der Programmgeber 160 steht weiterhin mit einer Recheneinheit 164 in Verbindung, in welcher die für die erwünschte asymmetrische Bewegung der Blasformteile bezüglich der Mittelebene 109 des Vorformlings erforderliche Verschiebung der Blasform ermittelt wird, die einer bestimmten Verteilung des insgesamt zugeführten hydraulischen Arbeitsmediums auf die beiden Antriebsmittel 117a, 117b entspricht. Die Relationen, nach denen die Verteilung zu erfolgen hat, werden einer Vergleichs- und Regeleinheit 142 vorgegeben, die jeweils ein Mengenverteilungsventil 171 für den zugeführten Volumenstrom 181 und ein Mengenverteilungsventil 173 für den verdrängten Volumenstrom 183 des hydraulischen Arbeitsmediums steuert, wobei die Bezeichnung der zugeführten oder verdrängten Volumenströme sich jeweils auf die Schließbewegungen der Blasformteile bezieht. Bei den Öffnungsbewegungen ist die Fließrichtung der Volumenströme entgegengesetzt. Über die Leitungen 156a, 156b und 155a, 155b stehen die Antriebsmittel 117a, 117b mit den jeweiligen Ausgängen bzw. Eingängen der Mengenverteilungsventile 171 bzw. 173 in Verbindung.

Zur Erfassung des Ist-Wertes der durchgeführten Verschiebung der Blasform ist ein Meßaufnehmer 137 vorgesehen, der über die Signalleitung 139 mit der Vergleichs- und Regeleinrichtung 142 in Verbindung steht, die in Abhängigkeit von einer Abweichung des Ist-Werts von dem im Rechner 164 errechneten Soll-Wert die Ventilstellung der Mengenverteilungsventile 171, 173 korrigiert. Es kann zweckmäßig sein, die Mengenverteilungsventile über eine Leitung 174 miteinander zu koppeln, da der verdrängte Volumenstrom aufgrund der nahezu vollständigen Inkompressibilität des hydraulischen Arbeitsmediums dem zugeführten Arbeitsmedium zumindest näherungsweise entspricht.

Der Meßaufnehmer 137 ist an einer verschiebbaren Gleichlaufeinrichtung 130 angeordnet, deren Aufbau der Gleichlaufeinrichtungen in den Fig. 1, 2 oder 5 entspricht, so daß die Verschiebung des Zahnrades 125 der Ist-Verschiebung der Blasform entspricht. Auch hier definiert die Position der Achse 126 direkt die Mittelebene der Blasform, da sie in dieser Mittelebene verläuft. Es ist aber auch möglich, den Meßaufnehmer z. B. an einem Blasformteil oder einer Trägerplatte anzuordnen, wobei dann allerdings die Ventile 171, 173 in Abhängigkeit vom Vergleich der Ist-Position des entsprechenden Blasformteils mit dem Weg-Zeit-Verlauf für dieses Blasformteil eingestellt werden.

Es ist weiterhin möglich, bei einer Ausführungsform der Fig. 5, bei welcher die Verschiebung der Blasform durch ein zusätzliches Antriebssystem erfolgt, die zu einer entsprechenden Verteilung des hydraulischen Arbeitsmediums führt, zusätzlich eine Verteileinrichtung für die insgesamt zugeführte Menge hydraulischen Arbeitsmediums vorzusehen. Die Einstellung der dazu erforderlichen Mengenverteilungsventile, die z.B. den Mengenverteilungsventilen 171, 173 entsprechen können, kann dabei in Abhängigkeit von der Verschiebung des Verbindungselements erfolgen.

Aus Gründen der Übersichtlichkeit sind die Gleichlaufeinrichtungen 30, 130 in den entsprechenden Figuren ohne Arretiermöglichkeit dargestellt. Eine Arretierung von verschiebbaren Gleichlaufeinrichtungen ist aber durch übliche Mittel, z.B. durch in Aussparung eingreifende Bolzen oder Klauen oder mittels Reibschluß ohne weiteres möglich, die daher nicht näher dargestellt zu werden brauchen.

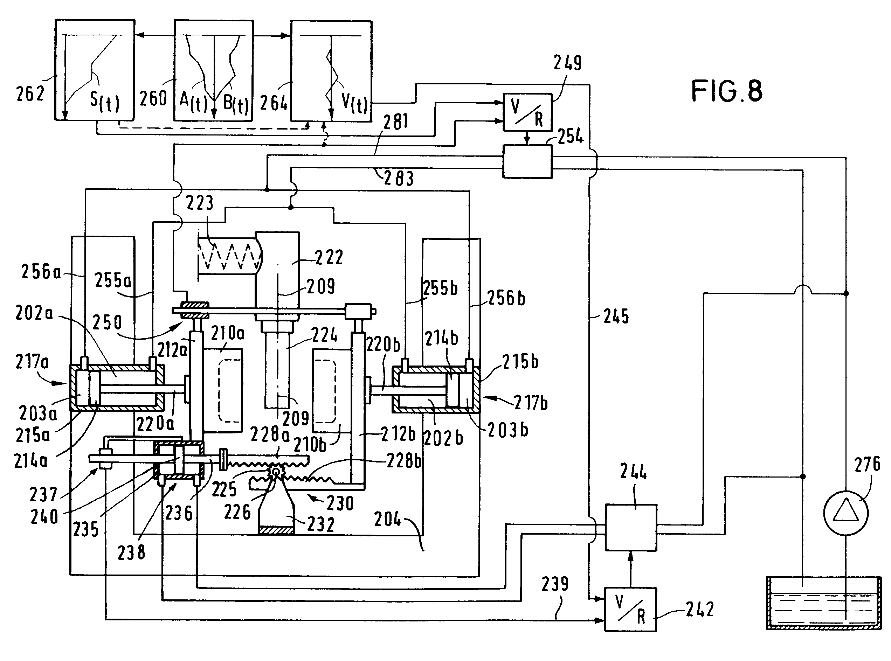

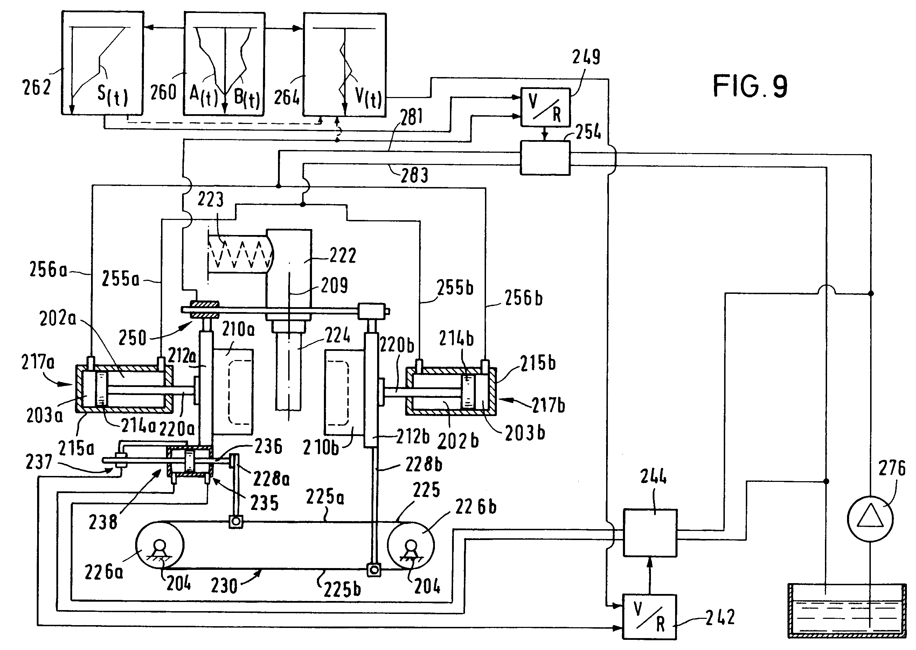

In den Figuren 8 - 10 sind ebenfalls Ausführungsbeispiele von Blasformvorrichtungen dargestellt, bei denen jedes Blasformteil mit einem separaten Antriebsmittel versehen ist. Dabei stimmen die beiden Ausführungsbeispiele gemäß den Figuren 8 und 9 weitgehend mit der Ausführungsform gemäß Fig. 5, im Prinzip aber auch mit jener gemäß Fig. 1 überein, so daß in den Figuren 8 und 9 Teile, die denen der bereis beschriebenen Ausführungsbeispiele entsprechen, mit gleichen, jedoch gegenüber der Fig. 5 um 100 und somit gegenüber der Fig. 1 um 200 höheren Bezugszeichen versehen sind.

Beim Ausführungsbeispiel gemäß Fig. 8 ist ebenfalls eine ein Zahnrad 225 sowie zwei Zahnstangen 228a, 228b aufweisende Gleichlaufeinrichtung vorgesehen, wobei jedoch die Halterung 232, die die Achse 226 für das Zahnrad 225 trägt, fest am Maschinenrahmen 204 angebracht ist. Ein weiterer Unterschied gegenüber den Ausführungsformen gemäß den Fig. 1 und 5 besteht darin, daß eine der beiden Zahnstangen, nämlich die Zahnstange 228a, von der Kolbenstange 236 eines in einem Zylinder 235 geführten Kolbens 240 getragen ist und praktisch eine Verlängerung dieser Kolbenstange 236 darstellt. Der Zylinder 235 dieses Antriebsmittels 238 ist fest mit der Trägerplatte 212a für das Blasformteil 210a verbunden.

Abweichend von den Ausführungsbeispielen gemäß den Fig. 1, 2, 3 und 5 wird somit die Bewegung der Blasformteile 210a, 210b nicht durch eine Verschiebung des Zahnrades 236 bewirkt, sondern durch die Änderung der wirksamen Länge eines anderen Verbindungselementes der Gleichlaufeinrichtung, nämlich der Zahnstange 228a. Die Änderung der wirksamen Länge erfolgt durch entsprechende Beaufschlagung des im Zylinder 235 geführten Kolbens 240 durch das Ventil 244, welches in der bereits im Zusammenhang mit den Figuren 1 und 5 beschriebenen Weise von einer Vergleichs- und Regeleinheit 242 gesteuert wird. Letztere ist über die Leitung 245 mit der Recheneinheit 264 verbunden, in welcher der jeweilige Soll-Abstand der Mittelebene der Blasformteile zur Mittelebene 209 des Vorformlings 224 errechnet wird. Die Position der Mittelebene der Blasformteile wird durch die Position des Kolbens 240 relativ zum Zylinder 235 und damit zu der diesen Zylinder tragenden Trägerplatte 212a bestimmt. In der Darstellung gemäß Fig. 8 nimmt der Kolben 240 seine neutrale, d.h. mittlere Position ein, in welcher die Mittelebene der beiden Blasformteile 210a, 210b mit der durch den Vorformlling 224 definierten Mittelebene 209 zusammenfällt. Eine Beaufschlagung des Zylinders 235 an einer der beiden Seiten des Kolbens 240 hat aufgrund der dadurch erfolgenden Längsverschiebung der Zahnstange 228a eine gleichgerichtete Verschiebung beider Blasformteile 210a, 210b zur Folge, so daß entsprechend einer Verschiebung z. B. des Zahnrades 125 bei der Ausführungsform gemäß Fig. 5, die den jeweiligen Abstand zwischen den beiden Formteilen 210a, 210b hälftig teilende Mittelebene gegenüber der durch den Vorformling 224 definierten Mittellinie oder Mittelebene 209 verschoben wird. Ein Unterschied gegenüber den bisher beschriebenen Ausführungsbeispielen mit einer Gleichlaufeinrichtung, bei welcher das Zahnrad veschoben wird, besteht darin, daß der im Rechner 264 errechnete Soll-Wert für die erforderliche Verschiebung der Blasform doppelt so groß ist wie im Falle der Ausführungsform beispielsweise gemäß den Fig. 1 und 5. - Ein weiterer Unterschied gegenüber der Ausführungsform gemäß Fig. 5 besteht darin, daß der Wegaufnehmer 237, der die Längenänderung der Zahnstange 228a erfaßt und über die Leitung 239 als Ist-Wert der Vergleichs- und Regeleinheit 242 zuführt, der Zahnstange 228a und dem Zylinder 235 zugeordnet ist.

Das Ausführungsbeispiel gemäß Fig. 9 stimmt in allen wesentlichen Einzelheiten mit dem der Fig. 8 überein, so daß für einander entsprechende Teile gleiche Bezugszeichen verwendet werden. Der einzige Unterschied zwischen beiden Ausführungen betrifft die Ausgestaltung der Gleichlaufeinrichtung, die im Falle der Fig. 9 aus einer Kette, einem Seil oder einem ähnlichen endlosen flexiblen Teil 225 besteht, welches um zwei in einem Abstand voneinander befindliche Räder, Scheiben oder dergleichen 226a, 226b geführt ist. Die beiden Räder oder dergleichen 226a, 226b sind drehbar am Maschinenrahmen 204 gelagert. Die Anordnung ist dabei so getroffen, daß die Richtungen, in welchen sich die Kette oder dergleichen 235 bewegt, parallel zu den Richtungen verlaufen, in welchen die beiden Blasformteile 210a, 210b ihre Öffnungs- und Schließbewegungen ausführen. Beide Blasformteile 210a, 210b bzw. deren Trägerplatten 212a, 212b sind über im wesentlichen starre Verbindungselemente 228a, 228b mit dem endlosen Teil 225 derart verbunden, daß das Verbindungselement 228a mit dem einen Abschnitt 225a und das andere Verbindungselement 228b mit dem anderen Abschnitt 225b des endlosen Teils 225 verbunden ist. Bei einer Bewegung der Kette oder dergleichen 225 um die beiden Räder 226a, 226b führen beide Abschnitte 225a, 225b der Kette entgegengerichtete Bewegungen aus, die den Bewegungen entsprechen, die von den jeweils zugeordneten Blasformteilen 210a, 210b ausgeführt werden. Das Verbindungselement 228a ist dabei an der Kolbenstange 236 eines Kolbens angebracht, der in einem Zylinder 235 geführt ist. Letzterer ist in der der Fig. 8 entsprechenden Ausführung fest mit der Trägerplatte 212a des Blasformteiles 210a verbunden. Es ergibt sich, abgesehen von der unterschiedlichen Ausgestaltung der Gleichlaufeinrichtung, die gleiche Wirkungsweise wie beim Ausführungsbeispiel gemäß Fig. 8.

Welcher der z. B. in den Figuren 8 und 9 dargestellten Gleichlaufeinrichtungen jeweils der Vorzug gegeben wird, hängt im wesentlichen von den räumlichen und baulichen Gegebenheiten an der Gesamtvorrichtung ab. In vielen Fällen ist es nicht möglich, die Gleichlaufeinrichtung unmittelbar unterhalb der beiden Blasformteile anzuordnen, da der dort vorhandene Raum für andere Einrichtungen - z. B. einen Blasdorn für die Zuführung des Druckmittels in den Vorformling, Dorne zum Spreizen des unteren Endes des Vorformlings - benötigt wird. In einem solchen Fall könnte z. B. der Ausführungsform gemäß Fig. 9 der Vorzug gegeben werden.

Bei der praktischen Ausführung wird man in der Regel bemüht sein, den kraftmäßigen Angriffspunkt der Gleichlaufeinrichtung an der Trägerplatte in der Nähe der Führung für diese Trägerplatte oder in der Nähe der Angriffspunkte der Antriebsmittel für die Öffnungs- und Schließbewegungen anzuordnen.

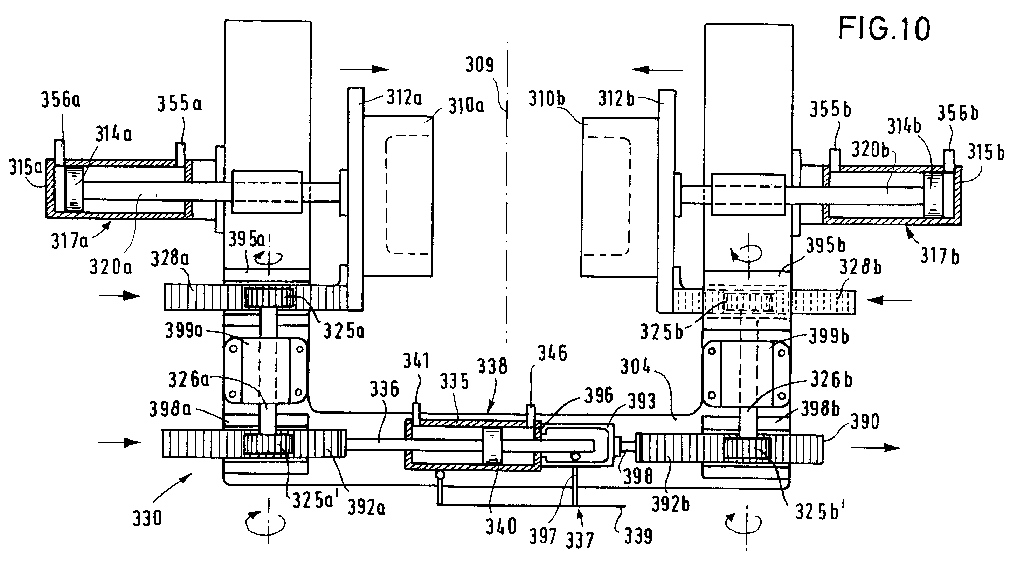

Letzteres wird insbesondere bei der Ausführungsform gemäß Fig. 10 berücksichtigt, deren dem Ausführungsbeispiel gemäß Fig. 1 entsprechende Teile mit gleichen, jedoch jeweils um 300 höheren Bezugszeichen versehen sind. Beim Ausführungsbeispiel gemäß Figur 10 ist ebenfalls für jedes Blasformteil ein separates Antriebsmittel 317a, 317b vorgesehen. Analog beispielsweise dem Ausführungsbeispiel der Fig. 5 ist jede der beiden Trägerplatten 312a, 312b mit einer Zahnstange 328a, 328b eines Gleichlaufsystems versehen, wobei die Zahnstangen 328a, 328b jedoch an der dem jeweils zugehörigen Blasformteil 310a, 310b abgekehrten Seite der Trägerplatte angebracht sind. Ferner sind die Zahnungen auf entgegengesetzten Seiten angeordnet derart, daß die Zahnung der Zahnstange 328a unter Zugrundelegung der Darstellung der Fig. 10 dem Betrachter zugekehrt ist, während die Zahnung der Zahnstange 328b an der dem Betrachter abgekehrten Seite der Zahnstange 328b angebracht ist. Hieraus ergibt sich dieselbe Drehrichtung aller Zahnräder 325a, 325b; 325a', 325b' bei entgegengesetzten Bewegungsrichtungen der Trägerplatten bzw. der ihnen zugeordneten Zahnstangen 328a, 328b.

Abweichend von den bisher beschriebenen Ausführungsbeispielen ist jeder der beiden Zahnstangen 328a, 328b ein Zahnrad 325a, 325b zugeordnet. Jedes Zahnrad ist mit einer Welle 326a bzw. 326b fest verbunden, die vom jeweils zugehörigen Zahnrad 325a bzw. 325b nach unten verlaufend in einem Bereich endet, der, bezogen auf die Darstellung der Fig. 10, sich unterhalb der Trägerplatten 312a, 312b bzw. der von diesen getragenen Blasformteilen 310a, 310b liegt. Jede der beiden Wellen 326a, 326b trägt an ihrem unteren Ende ein Zahnrad 325a' bzw. 325b'. Diesen beiden Zahnrädern 325a', 325b' ist eine gemeinsame Zahnstange 390 zugeordnet. Letztere weist zwei Zahnstangenabschnitte 392a, 392b auf, die durch eine Zylinder-Kolben-Einheit 338 miteinander verbunden sind. Der im Zylinder 335 dieser Einheit geführte Kolben 340 ist mit einer Kolbenstange 336 versehen, deren eines Ende fest mit dem Zahnstangenabschnitt 392a verbunden ist, der mit dem Zahnrad 325a' kämmt. Das andere Ende der Kolbenstange 336 trägt ein Teil 397 eines Wegaufnehmers 337, durch den die tatsächliche Lage (Ist-Wert) des Kolbens 340 zum Zylinder 335 erfaßt und über eine Leitung 339 an eine Vergleichs- und Regeleinheit gegeben wird, die beispielsweise der Einheit 242 der Fig. 9 entspricht. Der das Teil 397 des Wegaufnehmers 337 tragende Endbereich der Kolbenstange 336 ist durch die stirnseitige Begrenzung 396 des Zylinders 335 hindurchgeführt, wobei die dazu erforderliche Durchbrechung in der stirnseitigen Begrenzung 396 mit Dichtmitteln versehen ist, die einen Austritt des hydraulischen Druckmediums verhindern. Die Verbindung zwischen dem Abschnitt 392 der Zahnstange 390 und dem Zylinder 335 erfolgt über eine Verbindungsstange 398 und ein fest mit dem Zylinder 335 verbundenes Gehäuse 393, welches mit einem schlitzartigen Durchgang für das Teil 397 des Wegaufnehmers 337 versehen ist.

Bei der Ausführungsform gemäß Figur 10 stellt die Zahnstange 390 das bezüglich seiner Länge einstellbare kinematische Verbindungsglied der jeweils den Blasformteilen 310a, 310b zugeordneten Elemente der Gleichlaufeinrichtung 330 dar. Diese Zahnstange 390 ist in Richtung des Verlaufes ihrer Längsachse hin- und herbewegbar angeordnet, so daß sie den Drehbewegungen der beiden Zahnräder 325a', 325b' unter Ausführung einer entsprechenden Längsverschiebung folgen kann. Aufgrund der Tatsache, daß die beiden oberen Zahnräder 325a, 325b wie bereits beschrieben, auf entgegengesetzten Seiten mit den Zahnstangen 328a bzw. 328b kämmen, führen sie trotz der einander entgegengerichteten Öffnungs- und Schließbewgungen der Blaformteile gleichsinnige Drehbewegungen aus, die auch auf die von ihnen jeweils angetriebenen Zahnräder 325a' bzw. 325b' übertragen werden, so daß die Zahnstangen 390 den Gleichlauf beider Blasformteile 310a, 310b bewirken können.

Der Zylinder-Kolben-Einheit 338 kommt dabei die Funktion der Antriebe 238 der beiden Ausführungsbeispiele gemäß den Figuren 8 und 9 zu. Demzufolge sind die beiden Leitungen 341 und 346 mit einem Ventil verbunden, welches die Funktion des Ventils 244 bei dem Ausführungsbeispiel gemäß den Figuren 8 und 9 erfüllt. Unter Einschluß des Wegaufnehmers 337 und der Verbindungsleitung 339 ergibt sich dann die Schaltung, die auch in den Figuren 8 und 9 dargestellt ist. Dies gilt auch für die übrigen Teile und Anordnungen, die ebenfalls in der den Figuren 8 und 9, aber auch in einer der Figur 7 entsprechenden Weise ausgebildet sein können, wobei dann allerdings der Einheit 338 nur die Funktion eines Positionsgebers zukäme.

Die in Fig. 10 der Zeichnung dargestellten Führungsmittel 395a, 395b für die Zahnstange 328a bzw. 328b, die Führungsmittel 398a, 398b für die Zahnstangenabschnitte 392a, 392b und die Führungsmittel 399a, 399b für die Welle 326a bzw. 326b sind jeweils ortsfest am Maschinenrahmen 304 angebracht.

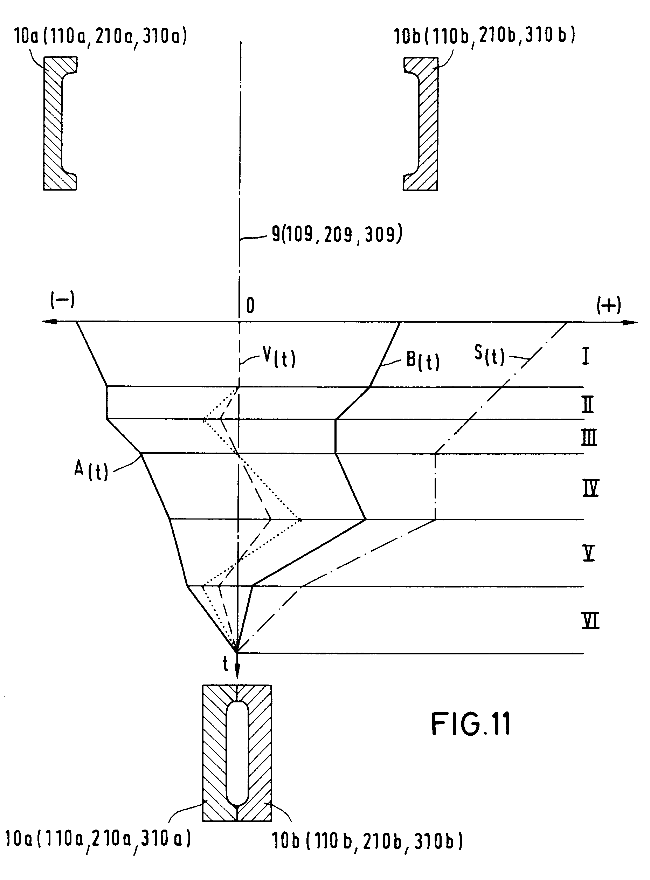

In Fig. 11 sind bei einem Schließvorgang mögliche Weg-Zeit-Verläufe A(t), B(t) der einzelnen Blasformteile 10a; 110a; 210a; 310a bzw. 10b; 110b; 210; 310b bezüglich der neutralen Ebene 9; 109; 209; 309 des Vorformlings, der sich ergebende Abstand-Zeit-Verlauf S(t) der Blasformteile zueinander sowie der sich ergebende erforderliche Verschiebungsverlauf V(t) (gestrichelt) der Blasform in ihrer Gesamtheit schematisch dargestellt. Der Weg ist auf der horizontalen Achse aufgetragen, wobei der wertemäßige Null-Punkt auf der neutralen Mittelebene 9; 109; 209; 309 liegt. Die Weg-Zeit-Verläufe A(t), B(t) sind z. B. im Programmgeber 60; 160; 260 eingegeben. Aus diesen Vorgaben wird im Rechner 62, 162, 262 der Abstand-Zeit-Verlauf S(t) der Blasformteile 10a, 10b; 110a, 110b; 210a, 210b; 310a, 310b zueinander berechnet. Im Rechner 64, 164, 264 wird ggf. der Abstand-Zeit-Verlauf V(t) der Mittelebene der Blasformteile 10a, 10b; 110a, 110b; 210a, 210b; 310a, 310b zur neutralen Ebene 9; 109; 209; 309 des Vorformlings ermittelt. Der Abstand-Zeit-Verlauf V(t) entspricht dem Verschiebeweg-Zeit-Verlauf der Blasform bzw. der Mittelebene ihrer Blaformteile.

Im Zeitabschnitt I des Diagramms bewegen sich die Blasformteile symmetrisch, also mit gleicher Geschwindigkeit in Richtung auf die neutrale Ebene 9; 109; 209; 309 des Vorformlings, die hierbei mit der Mittelebene der Blasform zusammenfällt. Demzufolge findet keine zusätzliche Verschiebung der Blasform statt. Die Geschwindigkeit, mit welcher sich die Blasformteile einander nähern, ist im Zeitabschnitt I doppelt so groß wie die Geschwindigkeit eines einzelnen Blasformteils bezogen auf die Bezugsebene 9; 109; 209; 309. Bei derartigen symmetrischen Bewegungen der Blasformteile bezüglich irgendeiner Bezugsebene kann es zweckmäßig sein, das ggf. vorhandene, bezüglich Position oder Länge veränderbare Verbindungselement, z. B. das Zahnrad 25 der Fig. 1 oder den Kolben 240 bzw. 340 der Fig. 8 - 10, so zu fixieren, daß das jeweilige Verbindungselement bezüglich seiner Position bzw. seiner wirksamen Länge keine Veränderung erfährt. Diese Fixierung kann in der neutralen Position des Zahnrades bzw. des Kolbens erfolgen, bei welcher die Mittelebene der Blasformteile mit der neutralen Ebene 9; 109; 209; 309 des Vorformlings zusammenfällt.

Im Zeitabschnitt II erfährt das Blasformteil 10a, 110a, 210a, 310a keine Bewegung, obwohl die Schließgeschwindigkeit der Blasformteile zueinander unverändert bleibt. In diesem Fall bewegt sich das Verbindungselement der Gleichlaufeinrichtung aus seiner Neutralposition mit der Folge, daß die Mittelebene der Blasform entsprechend dem Ausmaß dieser Bewegung, der Linie V(t) folgend, in Richtung auf das Blasformteil 10a, 110a verschoben wird. Das zusätzliche Antriebssystem, das bei den Ausführungsformen gemäß den Fig. 1, 3 und 5 das verschiebbaren Verbindungselement antreibt, muß demnach genau diesen Weg V(t) zurücklegen. Bei der Ausführungsform gemäß Fig. 5 wird dies dadurch bewirkt, daß das insgesamt zugeführte Arbeitsmedium ausschließlich zu dem Antriebsmittel gelangt, welches dem zu bewegenden Blasformteil zugeordnet ist.

Im Zeitabschnitt III erfährt das Blasformteil 10b, 110b, 210b, 310b unter entsprechenden Bedingungen keine Bewegung, so daß die reziproken Betriebszustände der Phase II vorliegen.

Bei der Ausführungsform gemäß der Fig. 6, bei welcher die Verschiebung durch ein zwischen Trägerplatte und Grundrahmen angeordnetes zusätzliches Antriebsmittel erfolgt, können zwei Fälle unterschieden werden. Soll das mit dem zusätzlichen Antriebsmittel 131 verbundene Blasformteil 110b keine Bewegung erfahren, wird das zusätzliche Antriebsmittel angehalten, wobei es zweckmäßig oder ggf. auch erforderlich sein kann, letzteres bezüglich des Grundrahmens 104 in der gewünschten Lage zu arretieren, so daß keine unerwünschten Bewegungen auftreten. Somit dient das gesamte zugeführte hydraulische Arbeitsmedium ausschließlich dem Antrieb des anderen Blasformteils, wobei das Arbeitsmedium entsprechend der Kurve S(t) bemessen wird. Im anderen Fall, d.h., wenn jenes Blasformteil 110a keine Bewegung erfahren soll, das nicht mit dem zusätzlichen Antriebsmittel 131 verbunden ist, durchfährt das zusätzliche Antriebsmittel die vorgegebene Bewegung des mit dem zusätzlichen Antriebsmittel verbundenen Blasformteils 110b, wobei diese Bewegung gleichzeitig auch der Hubbewegung des Antriebsmittels 131 für die Schließbewegung entspricht und das Antriebsmittel für das stillstehende Blasformteil kein hydraulisches Arbeitsmedium erhält. Auch hier kann es zweckmäßig sein, dieses Blasformteil bezüglich des Grundrahmens zu arretieren.

Bei der Ausführungsform gemäß Fig. 7, die kein zusätzliches Antriebssystem aufweist, würde das Mengenverteilungsventil in der Phase II bzw. III derart eingestellt sein, daß der Ventilschieber 171 oder das entsprechende Funktionselement die dem stillstehenden Blasformteil zugeordnete Zuleitung vollständig verschließt, so daß die vorher bemessene Menge hydraulischen Arbeitsmediums ausschließlich zu dem Antriebsmittel geführt wird, welches mit dem jeweils bewegten Blasformteil verbunden ist.

Im Zeitabschnitt IV erfolgt eine Verschiebung der Blasform, ohne daß gleichzeitig eine Schließbewegung der Blasformteile stattfindet. D. h., daß der Abstand der Blasformteile während der Phase IV unverändert bleibt. In dieser Phase verläuft die Kurve S(t) parallel zur Zeitachse. Die Blasformteile 10a, 110a; 10b, 110b wie auch die Kurve V(t) bewegen sich mit derselben Geschwindigkeit und in derselben Richtung von links nach rechts. Im Falle der Ausführungsform gemäß den Fig. 5, 6 und 8 - 10 würden dabei die Räume vor und hinter den Kolben 114a, 114b; 214a, 214b; 314a, 314b nahezu keine Druckunterschiede aufweisen, so daß durch eine Verschiebung lediglich das in diesen Räumen vorhandene hydraulische Arbeitsmedium von einem in den anderen Zylinder verdrängt wird, ohne daß durch die Sammelleitungen 181, 183 Arbeitsmedium zu- oder abgeführt wird. Bei einer Blasformmaschine gemäß Fig. 7 ist eine Verschiebung ohne Schließ- oder Öffnungsbewegung der Blasform nicht möglich, da kein aktives zusätzliches Antriebssystem vorhanden ist.

Im Zeitabschnitt V bewegt sich das Blasformteil 10b, 110b, 210b, 310b schneller in Richtung auf die Mittelebene 9, 109, 209, 309 bzw. Nullebene O, während im letzten Zeitabschnitt VI sich das Blasformteil 10a, 110a, 210a, 310a schneller bewegt. Bei derartigen Bewegungsabläufen erfährt die Blasform eine zusätzliche Verschiebung mit einer Geschwindigkeit, die der Hälfte der Summe der Geschwindigkeiten der einzelnen Blasformteile entspricht, und in Richtung auf das langsamer bewegte Blasformteil verläuft, wobei die jeweiligen Geschwindigkeiten mit dem jeweils ihrer Richtung entsprechenden Vorzeichen (+,-) versehen sind. Diese Bedingung gilt allgemein.

Der in Fig. 11 gestrichelt dargestellte Verlauf der Verschiebung V(t) der Blasform stimmt bei den Ausführungsformen gemäß den Fig. 1, 3 und 5, bei denen die Verschiebung der Blasform in ihrer Gesamtheit durch eine Positionsänderung eines der Bauteile der Gleichlaufeinrichtung bewirkt wird, mit dem Ausmaß der Verschiebung überein, die jeweils das einstellbare Bauteil der Gleichlaufeinrichtung erfährt. Wenn hingegen die Verschiebung der Blasform durch die Längenänderung eines Bauteils der Gleichlaufeinrichtung bewirkt wird, wie dies bei den Fig. 8 - 10 der Fall ist, sind die dazu erforderlichen Verschiebungen der die Längenänderung bewirkenden Teile doppelt so groß wie im Falle der anderen Ausführungsformen, bei denen z. B. das Zahnrad 25, 125 der Gleichlaufeinrichtung verschoben wird. Dies ist darauf zurückzuführen, daß eine Verschiebung des jeweiligen Zahnrades, das über die mit ihm zusammenwirkenden Zahnstangen 28a, 28b bzw. 128a, 128b auf beide Blasformteile einwirkt, bezüglich der Gesamt-Blasform und damit der Mittelebene derselben jeweils auch das doppelte Ausmaß der Verschiebung zur Folge hat wie im Falle der Ausführungsformen gemäß den Fig. 8 - 10, in denen jeweils nur die Länge eines Teils der Gleichlaufeinrichtung geändert wird, so daß eine Verdoppelung der Wirkung nicht eintritt. Das zur Erzielung der Verschiebung V(t) der Mittelebene der Blasform erforderliche Ausmaß der Verschiebung des Kolbens 240, 340 ist in Fig. 11 punktiert angedeutet. Es ist jeweils doppelt so groß wie der Wert V(t) der Verschiebung der Mittelebene.

Grundsätzlich können die Soll-Werte für Schließbewegung und für Öffnungsbewegung und für zusätzliche Verschiebung dadurch erhalten werden, daß die Weg-Zeit-Verläufe A(t) und B(t) in ein Koordinatennetz eingetragen werden, dessen Zeitachse entlang der neutralen Ebene 9; 109; 209; 309 und dessen Wegachse parallel zu den Öffnungs- und Schließbewegungen verläuft. Den Abstand-Zeit-Verlauf der Blasformteile zueinander ergibt sich dann aus der Beziehung:

$$S(t) = B(t) - A(t),$$

wenn B(t) auf dem positiven Abschnitt und A(t) auf dem negativen Abschnitt der Wegachse eingetragen sind, wobei sich der wertemäßige Null-Punkt auf der Mittelachse 9, 109, 209, 309 befindet.

Der Soll-Wert für die erforderliche Verschiebung des einstellbaren Verbindungsgliedes und damit der Blasform ergibt sich dann für die Ausführungsbeispiele mit verschiebbarem Zahnrad 25; 125 bzw. Steuerhebel 81 der Gleichlaufeinrichtung gemäß

$$V(t) = (A(t) + B(t))/2,$$

wobei das Vorzeichen jeweils die Lage, bezogen auf die Null-Linie, definiert. Dies entspricht der gestrichelten Darstellung in Fig. 11.

Bei den Ausführungsformen gemäß den Fig. 8 - 10, bei denen ein Bauelement der Gleichlaufeinrichtung bezüglich seiner wirksamen Länge verändert wird, ergibt sich der Soll-Wert für die erforderliche Verschiebung des Kolbens 240; 340 aus der neutralen Position gemäß

$$V(t) = (A(t) + B(t)).$$

Dies entspricht der punktierten Kurve in Fig. 11, wobei die effektiven Bewegungen der Formteile und der Blasform insgesamt mit denen der gestrichelten Kurve übereinstimmen.

In jedem Fall ist es gemäß der Erfindung möglich, nahezu jeden beliebigen Weg-Zeit-Verlauf der Blasformteile bezüglich der Mittelebene des Vorformlings zu erreichen.

Bei üblichen Gleichlaufeinrichtungen sind die Übersetzungsverhältnisse der zusammenwirkenden Teile 1 : 1. Es sind aber auch andere Übersetzungsverhältnisse möglich, die dann zu entsprechenden Änderungen der Relationen zwischen den Bewegungen der einzelnen Teile führen.

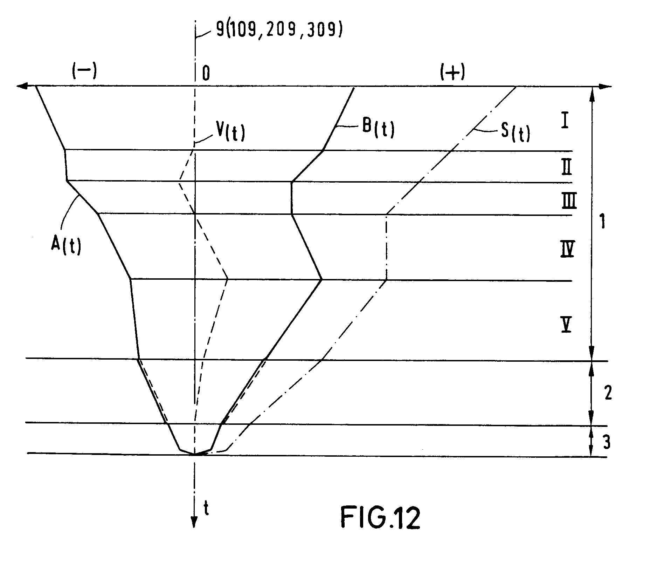

In der Fig. 12 ist ein anderer möglicher Bewegungablauf der Blasformteile während der Schließphase dargestellt, der in drei Bereiche 1 - 3 unterteilt ist. Im Bereich 3 am Ende der Schließphase sind für die Blasformteile 10a, 10b; 110a, 110b; 210a, 210b; 310a, 310b Bewegungen vorgesehen, die die Erfordernisse für das Abquetschen des Abfallmaterials und das Verschweißen der Nahtbereiche erfüllen. Im Bereich 1 des Bewegungsablaufes am Anfang der Schließphase sind die Bewegungen A(t), B(t) der Blasformteile vorgebbar. Sie weisen in diesem Fall Zeitabschnitte I-V auf, die den Zeitabschnitten I-V der Fig. 11 entsprechen und daher keiner weiteren Erläuterung bedürfen. Der Bereich 2 stellt einen Übergangsbereich dar, in welchem die Blasformteile von ihrer Endposition nach ihrer Bewegung gemäß Bereich 1 in die Startposition für den Bereich 3 gebracht werden. Für derartig unterteilte Bewegungsabläufe der Blasformteile ist es zweckmäßig, ein Programm vorzusehen, das entsprechend den drei Bereichen 1-3 drei Abschnitte aufweist. Im ersten Abschnitt können dann beliebige Weg-Zeit-Verläufe A(t), B(t) vorgegeben werden, wobei im zweiten Abschnitt die Bewegungen der Blasformteile berechnet werden, damit die Blasformteile von den Endpositionen des ersten Abschnitts in die Startpositionen des dritten Abschnitts gelangen, der innerhalb des Programms fest vorgegeben ist. In diesem Abschnitt sind entsprechend den obigen Erläuterungen die Bewegungsabläufe gespeichert, die zum Abquetschen der Abfallmaterialien und zum Verschweißen der Nahtbereiche für den jeweiligen Anwendungsfall erforderlich sind.

Die in den Fig. 11 und 12 gezeigten Kurvenverläufe setzen sich zum besseren Verständnis aus scharf abgegrenzten Teilabschnitten zusammen. Zweckmäßig wird es jedoch sein, Kurvenverläufe vorzusehen, die Übergangsbereiche aufweisen.

Wenngleich bei den vorstehend beschriebenen Beispielen immer die Bewegungen der Blasformteile und der Blasform während des Schließvorganges beschrieben und dargestellt sind, besteht selbstverständlich die Möglichkeit, auch in entsprechender Weise beim Öffnen der Blasform zu verfahren.

Weiterhin gilt bezüglich der Ausführungsbeispiele gemäß den Fig. 8 - 10, daß auch die jeweils andere Zahnstange so ausgebildet bzw. angeordnet ist, daß ihre wirksame Länge verändert werden kann. Es ist auch möglich, beim Ausführungsbeispiel gemäß Fig. 1, welches nur ein gemeinsames Antriebsmittel für die Öffnungs- und Schließbewegung der Blasformteile aufweist, anstelle des seine Position ändernden Zahnrades der Gleichlaufeinrichtung eine der beiden Zahnstangen bezüglich ihrer wirksamen Länge veränderbar auszubilden, also analog beispielsweise der Ausführungsform gemäß Fig. 8. Auch dabei würde dann gelten, daß der Sollwert V(t) für die Verschiebung des Kolbens in dem Zylinder der Gleichlaufeinrichtung sich nach der oben angegebenen Gleichung für die Ausführungsbeispiele gemäß den Fig. 8 - 10 errechnet.

Schließlich ist es auch möglich, analog der Ausführungsformen gemäß Fig. 7 das bezüglich seiner wirksamen Länge veränderbare Bauteil der Gleichlaufeinrichtung lediglich als Wegaufnehmer zu verwenden, um den Ist-Wert der tatsächlich stattgefundenen Verschiebung der Blasform festzustellen.

**Patentansprüche**

1. Verfahren zum Herstellen von Hohlkörpern aus thermoplastischem Kunststoff mittels Blasformen, bei welchem Verfahren ein Vorformling von einer wenigstens zwei Blasformteile (10a, 10b; 110a, 110b; 210a, 210b; 310a, 310b) aufweisenden Blasform aufgenommen und darin aufgeweitet wird und die Teile der Blasform zwischen einem Öffnungszustand, in welchem sie einen Abstand voneinander aufweisen, und einem schließzustand, in welchem sie aneinander anliegen und die einander zugekehrten Seiten der Blasformteile ein Formnest begrenzen, dessen Kontur der Gestalt des durch inneren Überdruck aufgeweiteten Vorformlings entspricht, mittels eines die Öffnungs- und/oder Schließbewegungen bewirkenden Antriebssystems (17; 117a, 117b; 217a, 217b; 317a, 317b) hin- und herbewegt werden, wobei die Blasform zumindest zeitweilig auch während der Zeitabschnitte, innerhalb derer die Öffnungs- und/oder Schließbewegungen der Blasformteile (10a, 10b; 110a, 110b; 210a, 210b; 310a, 310b) stattfinden, durch ein Antriebssystem (31, 38; 131, 138; 238; 338), welches zusätzlich zu dem die Öffnungs- und/oder Schließbewegungen der Blasformteile (10a, 10b; 110a; 110b; 210a, 210b; 310a, 310b) bewirkenden Antriebssystem (17; 117a, 117b; 217a, 217; 317a, 317b) verwendet wird eine Verschiebung erfährt, deren Richtung parallel zu den Schließ- und/oder Öffnungsbewegungen der Blasformteile verläuft, so daß die Blasformteile sich zumindest zeitweise relativ zu einer Bezugsebene (9, 109; 209; 309) der Blasformmaschine asymmetrisch bewegen.

2. Verfahren nach Anspruch 1, dadurch gekennzeichnet, daß die Blasformteile (10a, 10b; 110a, 110b; 210, 210b; 310a, 310b) mittels wenigstens eines Verbindungselementes (25; 125; 228a, 390) einer Gleichlaufeinrichtung (30; 130; 230; 330) kinematisch miteinander verbunden sind und wenigstens eines der Verbindungselemente während der zumindest zeitweiligen Verschiebung der Blasform bezüglich seiner Position oder seiner wirksamen Länge einstellbar ist.

3. Verfahren nach Anspruch 2, dadurch gekennzeichnet, daß jedem Blasformteil (10a, 10b; 110a, 110b; 210a, 210b; 310a, 310b) zumindest zeitweise für die Öffnungsbewegung und/oder für die Schließbewegung ein separater Weg-Zeit-Verlauf (A(t), B(t)) und/oder Geschwindigkeit-Verlauf relativ zu einer Bezugsebene (9; 109; 209; 309) der Blasformmaschine als Soll-Wert vorgegeben werden und der sich daraus ergebende Abstand-Zeit-Verlauf (S(t)) und/oder Geschwindigkeit-Verlauf der Blasformteile zueinander ermittelt und als Soll-Wert dem die Öffnungs- und Schließbewegungen bewirkenden Antriebssystem (17; 117a, 117b; 217a, 217b; 317a, 317b) eingegeben werden, und das zusätzliche Antriebssystem (38; 138; 238; 338), welches die Verschiebung bewirkt, auf das wenigstens eine Verbindungselement (25; 125; 228a; 390) der Gleichlaufeinrichtung (30; 130; 230; 330) einwirkt, welches bezüglich seiner Position oder seiner wirksamen Lange einstellbar ist, und aus den jeweiligen Weg-Zeit-Verläufen und/oder Geschwindigkeit-Verläufen der Blasformteile relativ zur Bezugsebene der Abstand-Zeit-Verlauf (V(t)) und/oder der Geschwindigkeit-Verlauf der Mittelebene der Blasformteile, relativ zu welcher diese sich gleichartig entgegengesetzt bewegen, zu der Bezugsebene ermittelt wird und als Soll-Wert für das die Verschiebung bewirkende Antriebssystem verwendet wird.

4. Verfahren nach Anspruch 1, dadurch gekennzeichnet, daß jedem Blasformteil (10a, 10b; 110a, 110b) zumindest zeitweise für die Öffnungsbewegung und/oder für die Schließbewegung ein separater Weg-Zeit-Verlauf (A(t), B(t)) und/oder Geschwindigkeit-Verlauf relativ zu einer Bezugsebene (9; 109) der Blasformmaschine vorgegeben wird und der sich daraus ergebende Abstand-Zeit-Verlauf (S(t)) und/oder Geschwindigkeit-Verlauf der Blasformteile (10a, 10b; 110a, 110b) zueinander ermittelt und als Soll-Wert dem die Öffnungs- und/oder Schließbewegungen bewirkenden Antriebssystem (31; 131) eingegeben wird, und das zusätzliche Antriebssystem, welches die Verschiebung bewirkt, mit der Blasformmaschine (104) und einem Blasformteil (10a; 110b) verbunden ist, und daS der diesem Blasformteil zugeordnete Weg-Zeit-Verlauf (A(t), B(t)) und/oder Geschwindigkeit-Verlauf dem zusätzlichen Antriebssystem (31; 131) als Vorgabewert eingegeben wird.

5. Verfahren nach Anspruch 2, dadurch gekennzeichnet, daß das Antriebssystem für die Öffnungs- und Schließbewegungen der Blasformteile (110a, 110b; 210a, 210b; 310a, 310b) für jedes Blasformteil ein separates hydraulisches Antriebsmittel (117a, 117b; 217a, 217b; 317a, 317b) aufweist und jedem Blasformteil zumindest zeitweise während der Schließ- und/oder Öffnungsbewegungen ein separater Weg-Zeit-Verlauf (A(t), B(t)) vorgegeben wird und der daraus resultierende Abstand-Zeit-Verlauf der Blasformteile zueinander durch die den Antriebsmitteln insgesamt pro Zeiteinheit zugeführte Menge hydraulischen Arbeitsmediums bewirkt wird, wobei die Verschiebung der Blasform durch eine Änderung der Position oder der wirksamen Länge wenigstens eines Verbindungselementes (125; 228a; 390) der Gleichlaufeinrichtung (130; 230; 330) bewirkt wird und die dem Antriebssystem insgesamt zugeführte Menge des hydraulischen Arbeitsmediums in Abhängigkeit von der Änderung der Position oder der wirksamen Länge des wenigstens einen Verbindungselementes (125; 228a; 390) der Gleichlaufeinrichtung auf die jeweiligen Antriebsmittel (117a, 117b; 217a, 217b; 317a, 317b) verteilt wird.

6. Verfahren nach einem der vorhergehenden Ansprüche, dadurch gekennzeichnet, daß die durch die Verschiebung der Blasform bewirkte Ist-Änderung der Position oder der wirksamen Länge des wenigstens einen Verbindungselementes (25; 125; 228a, 390) der Gleichlaufeinrichtung (30; 130; 230; 330) erfaßt und mit der Soll-Änderung, die der Soll-Verschiebung der Blasform entspricht, verglichen wird und in Abhängigkeit von der Abweichung zwischen Ist-Wert und Soll-Wert die die Verschiebung der Blasform bewirkenden Mittel (38; 138; 238, 338) geregelt werden.

7. Verfahren zum Herstellen von Hohlkörpern aus thermoplastischem Kunststoff mittels Blasformen, bei welchem Verfahren ein Vorformling von einer wenigstens zwei Blasformteile (110a, 110b) aufweisenden Blasform aufgenommen und darin aufgeweitet wird und die Teile der Blasform zwischen einem Öffnungszustand, in welchem sie einen Abstand voneinander aufweisen, und einem Schließzustand, in welchem sie aneinander anliegen und die einander zugekehrten Blasformteile ein Formnest begrenzen, dessen Kontur der Gestalt des durch inneren Überdruck aufgeweiteten Vorformlings entspricht, mittels eines die Öffnungs- und/oder Schließbewegungen bewirkenden Antriebssystems (117a, 117b) hin- und herbewegt werden, wobei die Blasform zumindest zeitweilig auch während der Zeitabschnitte, innerhalb derer die Öffnungs- und/oder Schließbewegungen der Blasformteile (110a, 110b) stattfinden, eine Verschiebung erfährt, deren Richtung parallel zu den Schließ- und/oder Öffnungsbewegungen der Blasformteile verläuft, und für jedes Blasformteil (110a, 110b) ein separates hydraulisches Antriebsmittel (117a, 117b) vorgesehen ist und jedem Blasformteil zumindest zeitweise während der Schließ- und/oder Öffnungsbewegungen ein separater Weg-Zeit-Verlauf (A(t)), (B(t)) und/oder Geschwindigkeits-Verlauf vorgegeben wird und der daraus resultierende Abstand-Zeit-Verlauf (S(t)) und/oder Geschwindigkeits-Verlauf der Blasformteile zueinander durch die den Antriebsmitteln (117a, 117b) insgesamt pro Zeiteinheit zugeführte Menge hydraulischen Arbeitsmediums bewirkt wird, wobei die erforderliche Verschiebung der Blasform durch eine entsprechende Verteilung des dem Antriebssystem insgesamt zugeführten hydraulischen Arbeitsmediums auf die einzelnen Antriebe (117a, 117b) bewirkt wird, so daß die Blasformteile sich zumindest zeitweise relativ zu einer Bezugsebene (109) der Blasformmaschine asymmetrisch bewegen.

8. Verfahren nach Anspruch 7, dadurch gekennzeichnet, daß zunächst die für die Schließ- und Öffnungsbewegungen der Blasformteile (110a, 110b) insgesamt erforderliche Menge an Arbeitsmedium bemessen wird und danach diese Menge des hydraulischen Arbeitsmediums auf die Antriebsmittel (117a, 117b) verteilt wird.

9. Verfahren nach Anspruch 7, dadurch gekennzeichnet, daß die Blasformteile (110a, 110b) mittels wenigstens eines Verbindungselementes (125) einer Gleichlaufeinrichtung (130) kinematisch miteinander verbunden sind und wenigstens eines der Verbindungselemente während der zumindest zeitweiligen Verschiebung der Blasform bezüglich seiner Position oder seiner wirksamen Länge einstellbar ist.

10. Verfahren nach Anspruch 9, dadurch gekennzeichnet, daß die durch die Verschiebung der Blasform bewirkte Ist-Änderung der Position oder der wirksamen Lange des wenigstens einen Verbindungselementes (125) der Gleichlaufeinrichtung (130) erfaßt und mit der Soll-Änderung, die der Soll-Verschiebung der Blasform entspricht, verglichen wird und in Abhängigkeit von der Abweichung zwischen Ist-Wert und Soll-Wert die Verteilung des hydraulischen Arbeitsmediums auf die separaten Antriebe (117a, 117b) geregelt wird.

11. Verfahren nach einem der vorhergehenden Ansprüche, dadurch gekennzeichnet, daß für die Öffnungsbewegung und für die Schließbewegung der Blasformteile separate Weg-Zeit-Verläufe (A(t); B(t)) und/oder Geschwindigkeit-Verläufe vorgegeben werden.

12. Verfahren nach einem der vorhergehenden Ansprüche, dadurch gekennzeichnet, daß die resultierenden Bewegungen der Blasformteile (10a, 10b; 110a, 110b; 210a, 210b; 310a, 310b) in Abhängigkeit von einem Programm ausgeführt werden, in welchem die Weg-Zeit-Verläufe (A(t); B(t)) als Vorgaben eingegeben sind und daraus die Soll-Werte für den Abstand-Zeit-Verlauf (S(t)) der Blasformteile und ggf. der Abstand-Zeit-Verlauf (V(t)) der Mittelebene der Blasformteile zu der Bezugsebene (9; 109; 209; 309) ermittelt werden.

13. Verfahren nach einem der vorhergehenden Ansprüche, dadurch gekennzeichnet, daß der Weg-Zeit-Verlauf und/oder der Geschwindigkeit-Verlauf der Blasformteile während des Schließvorganges am Ende der Schließphase zu Bewegungen der Blasformteile (10a, 10b; 110a, 110b; 210a, 210b; 310a, 310b) führt, die für das Bilden einer Schweißnaht und/oder das Abquetschen des Abfallmaterials günstig sind.

14. Verfahren nach Anspruch 13, dadurch gekennzeichnet, daß die Bewegungen der Blasformteile (10a, 10b; 110a, 110b; 210a, 210b; 310a, 310b) am Ende der Schließphase symmetrisch zu einem mit der Blasform zusammenwirkenden Bauteil, z.B. einem Dorn, erfolgen, welches nicht an den Schließ- und Öffnungsbewegungen teilnimmt.

15. Verfahren nach Anspruch 13, dadurch gekennzeichnet, daß die Bewegungen der Blasformteile (10a, 10b; 110a, 110b; 210a, 210b; 310a, 310b) am Ende der Schließphase in Abhängigkeit von einem Abschnitt eines Programms für die Schließbewegungen ablaufen, in welchen die Vorgaben für die Erfordernisse für das Bilden einer Schweißnaht und/oder das Abquetschen von Abfallmaterial eingegeben sind.

16. Verfahren nach Anspruch 2 oder 9, dadurch gekennzeichnet, daß das wenigstens eine Verbindungselement (25; 125; 228a; 390) der Gleichlaufeinrichtung (30; 130; 230; 330), welches bezüglich seiner Position oder seiner wirksamen Länge einstellbar ist, arretiert wird, wenn die Blasform keine Verschiebung erfährt.

17. Verfahren nach einem der vorhergehenden Ansprüche, dadurch gekennzeichnet, daß die Blasform in geschlossenem und/oder in vollständig geöffnetem Zustand verschoben wird.

18. Verfahren nach einem der vorhergehenden Ansprüche, dadurch gekennzeichnet, daß die Blasform verschoben wird, wenn die Blasformteile (10a, 10b; 110a, 110b; 210a, 210b; 310a, 310b) eine Position zwischen der vollständig geöffneten und der vollständig geschlossenen Position einnehmen und der Abstand der Blasformteile voneinander zeitweilig keine Veränderung erfährt.

19. Verfahren nach einem der vorhergehenden Ansprüche, dadurch gekennzeichnet, daß als Bezugsebene der Blasformmaschine die Mittelebene (9; 109; 209; 309) des in der Aufnahmeposition befindlichen Vorformlings (24; 124; 224) verwendet wird.

20. Vorrichtung zum Herstellen von Hohlkörpern aus thermoplastischem Kunststoff mittels Blasformen mit einer Blasform, die wenigstens zwei Blasformteile (10a, 10b; 110a, 110b; 210a, 210b; 310a, 310b) aufweist, die zwischen einem Offenzustand, in welchem sie einen Abstand voneinander aufweisen, und einem Schließzustand, in welchem sie aneinander anliegen und ein Formnest begrenzen, mittels eines Antriebssystems (17; 117a, 117b; 217a, 217b; 317a, 317b) hin- und herbewegbar sind, wobei Mittel vorhanden sind, die auch während der Öffnungs- und/oder Schließbewegungen der Blasformteile ein Verschieben der Blasform in einer Richtung parallel zu den Öffnungs- und/oder Schließbewegungen der Blasformteile ermöglichen und diese Mittel als ein Antriebssystem (31, 38; 131, 138; 238; 338) ausgebildet sind, das zusätzlich zu dem die Öffnungs- und Schließbewegungen bewirkenden Antriebssystem (17; 117a, 117b; 217a, 217b; 317a, 317b) verwendet wird.

21. Vorrichtung nach Anspruch 20, dadurch gekennzeichnet, daß das zusätzliche Antriebssystem (31; 131) mit der Blasformmaschine (4; 104) und einem der Blasformteile (10a; 110b) verbunden ist.

22. Vorrichtung nach Anspruch 20, dadurch gekennzeichnet, daß die Blasform wenigstens ein die Blasformteile (10a, 10b; 110a, 110b; 210a, 210b; 310a, 310b) kinematisch verbindendes Verbindungselement (25; 125; 228a; 390) einer Gleichlaufeinrichtung (30; 130; 230; 330) aufweist, das an der Blasformmaschine angeordnet ist und dessen Position oder wirksame Länge einstellbar ist.

23. Vorrichtung nach Anspruch 22, dadurch gekennzeichnet, daß das zusätzliche Antriebssystem (38; 138; 238; 338) mit der Blasformmaschine (4; 104; 204, 304) und dem wenigstens einen Verbindungselement (25; 125; 228a; 390) der Gleichlaufeinrichtung (30, 130; 230, 330) verbunden ist.

24. Vorrichtung zum Herstellen von Hohlkörpern aus thermoplastischem Kunststoff mittels Blasformen mit einer Blasform, die wenigstens zwei Blasformteile (110a, 110b) aufweist, die zwischen einem Offenzustand, in welchem sie einen Abstand voneinander aufweisen, und einem Schließzustand, in welchem sie aneinander anliegen und ein Formnest begrenzen, mittels eines Antriebssystems (117a, 117b) hin- und herbewegbar sind, wobei das Antriebssystem für die Öffnungs- und Schließbewegungen der Blasformteile (110a, 110b) für jedes Blasformteil ein separates hydraulisches Antriebsmittel (117a, 117b) aufweist und Mittel vorhanden sind, die auch während der Öffnungs- und/oder Schließbewegungen der Blasformteile ein Verschieben der Blasform in einer Richtung parallel zu den Öffnungs- und/oder Schließbewegungen der Blasformteile ermöglichen und diese Mittel als Verteilungsventile (171, 173) für die Verteilung des insgesamt den hydraulischen Antriebsmitteln (117a, 117b) zugeführten bzw. verdrängten hydraulischen Arbeitsmediums ausgebildet sind.

25. Vorrichtung nach Anspruch 24, dadurch gekennzeichnet, daß die Blasform wenigstens ein die Blasformteile (110a, 110b) kinematisch verbindendes Verbindungselement (125) einer Gleichlaufeinrichtung (130) aufweist, das an der Blasformmaschine angeordnet ist und dessen Position oder wirksame Länge einstellbar ist.

26. Vorrichtung nach Anspruch 22 oder 25, dadurch gekennzeichnet, daß das wenigstens eine Verbindungselement der Gleichlaufeinrichtung, dessen Position oder wirksame Länge einstellbar ist, bezüglich seiner Position oder wirksamen Länge fixierbar angeordnet ist.

27. Vorrichtung nach Anspruch 22 oder 25, dadurch gekennzeichnet, daß das wenigstens eine Verbindungselement (25; 125; 228a, 390) der Gleichlaufeinrichtung (30; 130; 230; 330), dessen Position oder wirksame Länge einstellbar ist, mit einem Meßaufnehmer (37, 137; 237; 337) zur Feststellung der Verschiebung der Blasform verbunden ist.

28. Vorrichtung nach Anspruch 22 oder 25, dadurch gekennzeichnet, daß das einstellbare Verbindungselement (25; 125) der Gleichlaufeinrichtung (30; 130) als verschiebbar gelagertes Zahnrad (25; 125) ausgebildet ist, welches mit zwei jeweils mit den Blasformteilen (10a, 10b; 110a, 110b) verbundenen Zahnstangen zusammenwirkt.

29. Vorrichtung nach Anspruch 22 oder 25, dadurch gekennzeichnet, daß das einstellbare Verbindungselement als verschiebbar gelagerter Steuerhebel (81) eines Hebelsystems (81, 83a, 83b) ausgebildet ist, dessen Hebelstangen (83a, 83b) mit jeweils einer der beiden Blasformteile (10a, 10b) verbunden ist.

30. Vorrichtung nach Anspruch 22 oder 25, dadurch gekennzeichnet, daß das einstellbare Verbindungselement (228a) unter Zwischenschaltung von Mitteln (238), die eine Änderung der wirksamen Länge des Verbindungselementes (228a) ermöglichen, mit einem (210a) der beiden Blasformteile verbunden ist.

31. Vorrichtung nach Anspruch 30, dadurch gekennzeichnet, daß das die Änderung der wirksamen Länge ermöglichende Mittel (238) als in einem Zylinder (235) geführter Kolben (240) ausgebildet ist, dessen Kolbenstange (236) das Verbindungselement trägt oder bildet.

32. Vorrichtung nach Anspruch 31, dadurch gekennzeichnet, daß das bezüglich seiner wirksamen Länge einstellbare Verbindungselement als Zahnstange (228a) ausgebildet ist, die mit einem Zahnrad (225) kämmt.

33. Vorrichtung nach Anspruch 31, dadurch gekennzeichnet, daß das bezüglich seiner wirksamen Länge einstellbare Verbindungselement (228a) mit einem endlosen flexiblen Verbindungselement (230) verbunden ist, welches um zwei in einem Abstand voneinander befindliche Führungsräder oder dgl. (226a, 226b) umläuft.

34. Vorrichtung nach Anspruch 22 oder 25, dadurch gekennzeichnet, daß das bezüglich seiner wirksamen Länge einstellbare Verbindungselement als Zahnstange (390) ausgebildet ist, welche mit zwei Zahnrädern (325a', 325b') kämmt, deren Rotationsbewegungen von den Bewegungen der Blasformteile (310a, 310b) abgeleitet sind, und die Zahnstange (390) im Bereich zwischen den beiden Zahnrädern (325a', 325b') mit Mitteln (338) versehen ist, die eine Änderung der Länge der Zahnstange (390) erlauben.

35. Vorrichtung nach Anspruch 34, dadurch gekennzeichnet, daß die die Einstellung der Länge der Zahnstange (390) erlaubende Mittel als Zylinder-Kolben-Einheit (338) ausgebildet sind.

36. Vorrichtung nach Anspruch 20 oder 24, dadurch gekennzeichnet, daß sie mit einem Wegaufnehmer (50; 150; 250) zur Feststellung des Abstandes der Blasformteile (10a, 10b; 110a, 110b; 210a, 210b) bzw. deren Trägerplatten (12a, 12b; 112a, 112b; 212a, 212b) voneinander versehen ist.

37. Vorrichtung nach Anspruch 20 oder 24, dadurch gekennzeichnet, daß wenigstens ein Programmgeber (60; 160; 260) vorhanden ist, in welchen die separaten Weg-Zeit-Verläufe und/oder die separaten Geschwindigkeit-Verläufe (A(t), B(t)) der Blasformteile (10a, 10b; 110a, 110b; 210a, 210b) während der Schließ- und/oder Öffnungsbewegungen relativ zu einer Bezugsebene (9; 109; 209) eingegeben sind.

38. Vorrichtung nach Anspruch 37, dadurch gekennzeichnet, daß der wenigstens eine Programmgeber (60; 160; 260) mit wenigstens einer Recheneinheit (62; 162; 262) in Verbindung steht, die in Abhängigkeit von den Weg-Zeit-Verläufen der Blasformteile (10a, 10b; 110a, 110b; 210a, 210b) den Abstand-Zeit-Verlauf (S(t)) und/oder den Geschwindigkeit-Verlauf der Blasformteile (10a, 10b; 110a, 110b; 210a, 210b) zueinander bestimmt.

39. Vorrichtung nach Anspruch 37, dadurch gekennzeichnet, daß der wenigstens eine Programmgeber (60; 160; 260) mit wenigstens einer Recheneinheit (64; 164; 264) in Verbindung steht, die in Abhängigkeit von den Weg-Zeit-Verläufen der Blasformteile (10a, 10b; 110a, 110b; 210a, 210b) den Abstand-Zeit-Verlauf (V(t)) und/oder den Geschwindigkeit-Verlauf der Mittelebene der Blasformteile (10a, 10b; 110a, 110b; 210a, 210b), in Bezug auf welche sich die Blasformteile gleichartig entgegengesetzt bewegen, relativ zu einer Bezugsebene (9; 109; 209) der Blasformmaschine bestimmt.

40. Vorrichtung nach Anspruch 37, dadurch gekennzeichnet, daß jeweils Programmgeber (60; 160; 260) für die Schließbewegungen und für die Öffnungsbewegungen der Blasformteile (10a, 10b; 110a, 110b; 210a, 210b) vorgesehen sind.

41. Vorrichtung nach Anspruch 37, dadurch gekennzeichnet, daß der Programmgeber für die Schließbewegungen der Blasformteile (10a, 10b; 110a, 110b; 210a, 210b; 310a, 310b) wenigstens zwei Programmabschnitte aufweist, von denen der der Endphase der Schließbewegung zugeordnete Programmabschnitt die Vorgaben für die Erfordernisse für das Bilden einer Schweißnaht und/oder das Abquetschen von Abfallmaterial enthält.

42. Vorrichtung nach Anspruch 41, dadurch gekennzeichnet, daß zwischen dem der Endphase der Schließbewegung zugeordneten Programmabschnitt und dem vorhergehenden frei einstellbaren Programmabschnitt ein Zwischen-Programmabschnitt eingeschaltet ist, der dazu dient, die Bewegungen der Blasformteile (10a, 10b; 110a, 110b; 210a, 210b; 310a, 310b) zwischen deren jeweiliger Position am Ende des vorhergehenden Programmabschnittes und der jeweiligen Position der Blasformteile am Anfang des der Endphase der Schließbewegung zugeordneten Programmabschnittes zu bestimmen.

**Claims**

1. A process for the production of hollow bodies of thermoplastic material by means of blow molding, in which process a preform is received by a blow molding mold comprising at least two blow molding mold portions (10a, 10b; 110a, 110b; 210a, 210b; 310a, 310b) and expanded therein and the portions of the mold are reciprocated between an open condition in which they are at a spacing from each other and a closed condition in which they bear against each other and the mutually facing sides of the mold portions define a mold cavity whose contour corresponds to the configuration of the preform which is expanded by an increased internal pressure, the movement of the mold portions being produced by means of a drive system (17; 117a, 117b; 217a, 217b; 317a, 317b) for producing the opening and/or closing movements, wherein at least temporarily during the periods of time within which the opening and/or closing movements of the mold portions (10a, 10b; 110a, 110b; 210a, 210b; 310a, 310b) occur, the blow molding mold also experiences a displacement by a drive system (31, 38; 131, 138; 238; 338) which is used in addition to the drive system (17; 117a, 117b; 217a, 217b; 317a, 317b) which produces the opening and/or closing movements of the mold portions (10a, 10b; 110a, 110b; 210a, 210b; 310a, 310b), the direction of said displacement of the mold being parallel to the closing and/or opening movements of the mold portions so that at least at times the mold portions move asymmetrically relative to a reference plane (9; 109; 209; 309) of the blow molding machine.

2. A process according to claim 1 characterised in the mold portions are kinematically connected together by means of at least one connecting element (25; 125; 228a, 390) of a synchronisation arrangement (30; 130; 230; 330) and at least one of the connecting elements is adjustable in respect of its position or its effective length during the at least temporary displacement of the blow molding mold.

3. A process according to claim 2 characterised in that a separate travel-time characteristic (A(t), B(t)) and/or speed characteristic relative to a reference plane (9; 109; 209; 309) of the blow molding machine is preset as a reference value for each blow molding mold portion (10a, 10b; 110a, 110b; 210a, 210b; 310a, 310b) at least at times in respect of the opening movement and/or the closing movement, and the resulting distance-time characteristic (S(t)) and/or speed characteristic of the mold portions relative to each other is ascertained and inputted as a reference value for the drive system (17; 117a, 117b; 217a, 217b; 317a, 317b) for producing the opening and closing movements, and the additional drive system (38; 138; 238; 338) which produces the displacement acts on the at least one connecting element (25; 125; 228a; 390) of the synchronisation arrangement, which is adjustable in respect of its position or its effective length, and from the respective travel-time characteristics and/or speed characteristics in respect of the mold portions relative to the reference plane the distance-time characteristic (V(t)) and/or the speed characteristic of the central plane of the mold portions, relative to which the mold portions are similarly moved in opposite relationship to each other, is ascertained in relation to the reference plane and used as a reference value for the drive system for producing the mold displacement.

4. A process according to claim 1 characterised in that a separate travel-time characteristic (A(t), B(t)) and/or speed characteristic relative to a reference plane (9; 109) of the blow molding machine is preset for each blow molding mold portion (10a, 10b; 110a, 110b) at least at times in respect of the opening movement and/or the closing movement, and the resulting distance-time characteristic (S(t)) and/or speed characteristic of the mold portions (10a, 10b; 110a, 110b) relative to each other is ascertained and inputted as a reference value to the drive system (31; 131) for producing the opening and/or closing movements, and the additional drive system for producing the displacement is connected to the blow molding machine (104)and a mold portion (10a; 110b), and that the travel-time characteristic (A(t), B(t)) and/or speed characteristic, associated with said mold portion, is inputted as a presetting value to the additional drive system (31; 131).

5. A process according to claim 2 characterised in that the drive system for the opening and closing movements of the mold portions (110a, 110b; 210a, 210b; 310a, 310b) has a separate hydraulic drive means (117a, 117b; 217a, 217b; 317a, 317b) for each mold portion (110a, 110b; 210a, 210b; 310a, 310b) and a separate travel-time characteristic (A(t), B(t)) is preset for each mold portion at least at times during the closing and/or opening movements, and the resulting distance-time characteristic of the mold portions relative to each other is produced by the amount of hydraulic operating fluid which is supplied to the drive means in total per unit of time, wherein displacement of the mold is effected by a variation in the position or effective length of at least one connecting element (125; 228a, 3909) of the synchronisation arrangement (130; 230; 330) and the total amount of hydraulic operating fluid fed to the drive system is distributed to the respective drive means (117a, 117b; 217a, 217b; 317a, 317b) in dependence on the variation in position or effective length of the at least one connecting element (125; 228a; 390) of the synchronisation arrangement.

6. A process according to one of the preceding claims characterised in that the actual variation, which is caused by displacement of the mold, in the position or effective length of the at least one connecting element (25; 125; 228a, 390) of the synchronisation arrangement (30; 130; 230; 330) is detected and compared to the reference variation which corresponds to the reference displacement of the mold, and the means (38, 138; 238; 338) for producing the displacement of the mold are regulated in dependence on the debviation between the actual value and the reference value.

7. A process for the production of hollow bodies of thermoplastic material by means of blow molding, in which process a preform is received by a blow molding mold comprising at least two blow molding mold portions (110a, 110b) and expanded therein, and the portions of the mold are reciprocated between an open condition in which they are at a spacing from each other and a closed condition in which they bear against each other and the mutually facing mold portions define a mold cavity whose contour corresponds to the configuration of the preform which is expanded by an increased internal pressure, the movement of the mold portions being produced by means of a drive system (117a, 117b) for producing the opening and/or closing movements, wherein at least temporarily during the periods of time within which the opening and/or closing movements of the mold portions (110a, 110b) occur the blow molding mold also experiences a displacement whose direction is parallel to the closing and/or opening movements of the mold portions, and a separate hydraulic drive means (117a, 117b) is provided for each mold portion (110a, 110b) and a separate travel-time characteristic (A(t)), (B(t)) and/or speed characteristic is preset for each mold portion at least at times during the closing and/or opening movements and the resulting distance-time characteristic (S(t)) and/or speed characteristic of the mold portions relative to each other is produced by the amount of hydraulic operating fluid which is supplied to the drive means (117a, 117b) in total per unit of time, wherein the required displacement of the blow molding mold is produced by suitable distribution to the individual drives (117a, 117b) of the hydraulic operating fluid which is supplied in total to the drive system so that at least at times the mold portions move asymmetrically relative to a reference plane (109) of the blow molding machine.

8. A process according to claim 7 characterised in that firstly the total amount of hydraulic operating fluid required for the closing and/or opening movements of the mold portions (110a, 110b) is measured and thereafter said amount of hydraulic operating fluid is distributed to said drive means (117a, 117b).

9. A process according to claim 7 characterised in that the mold portions (110a, 110b) are kinematically connected together by means of at least one connecting element (125) of a synchronisation arrangement (130) and at least one of the connecting elements is adjustable in respect of its position or its effective length during the at least temporary displacement of the mold.

10. A process according to claim 9 characterised in that the actual variation, which is produced by the displacement of the mold, in respect of position or effective length of the at least one connecting element (125) of the synchronisation arrangement (130) is detected and compared to the reference variation which corresponds to the reference displacement of the mold, and distribution of the hydraulic operating fluid to the separate drive means (117a, 117b) is regulated in dependence on the deviation between the actual value and the reference value.

11. A process according to one of the preceding claims characterised in that separate travel-time characteristics (A(t); B(t)) and/or speed characteristics are preset in respect of the opening movements and the closing movement of the mold portions.

12. A process according to one of the preceding claims characterised in that the resulting movements of the mold portions (10a, 10b; 110a, 110b; 210a, 210b; 310a, 310b) are performed in dependence on a program in which the travel-time characteristics (A(t); B(t)) are inputted as presetting data and therefrom are ascertained the reference values in respect of the distance-time characteristic (S(t)) of the mold portions and possibly the distance-time characteristic (V(t)) of the central plane of the mold portions relative to the reference plane (9; 109; 209; 309).

13. A process according to one of the preceding claims characterised in that the travel-time characteristic and/or the speed characteristic of the mold portions during the mold closing procedure results at the end of the closing phase in movements of the mold portions (10a, 10b; 110a, 110b; 210a, 210b; 310a, 310b) which are appropriate for forming a welded seam and/or squeezing off the waste material.

14. A process according to claim 13 characterised in that the movements of the mold portions (10a, 10b; 110a, 110b; 210a, 210b; 310a, 310b) at the end of the closing phase occur symmetrically with respect to a component such as a mandrel member which co-operates with the mold and which does not participate in the closing and opening movements.

15. A process according to claim 13 characterised in that the movements of the mold portions (10a, 10b; 110a, 110b; 210a, 210b; 310a, 310b) occur at the end of the mold closing phase in dependence on a section of a program in respect of the closing movements. into which are inputted the presetting data in respect of the requirements for the formation of a welded seam and/or squeezing off the waste material.

16. A process according to claim 2 or claim 9 characterised in that the at least one connecting element (25; 125; 228a; 390) of the synchronisation arrangement, which is adjustable in respect of its position or its effective length, is locked if the blow molding mold does not experience any displacement.

17. A process according to one of the preceding claims characterised in that the blow molding mold is displaced in the closed and/or in the totally opened condition.

18. A process according to one of the preceding claims characterised in that the mold is displaced if the mold portions (10a, 10b; 110a, 110b; 210a, 210b; 310a, 310b) occupy a position between the completely opened and the completely closed positions and the spacing of the mold portions from each other temporarily does not experience any change.

19. A process according to one of the preceding claims characterised in that the central plane (9; 109; 209; 309) of the preform (24; 124; 224) when in the position of being received in the mold is used as the reference plane of the blow molding machine.

20. Apparatus for the production of hollow bodies of thermoplastic material by means of blow molding, having a blow molding mold which has at least two mold portions (10a, 10b; 110a, 110b; 210a, 210b; 310a, 310b) which are reciprocable between an open condition in which they are at a spacing from each other and a closed position in which they bear against each other and define a mold cavity, by means of a drive system (17; 117a, 117b; 217a, 217b; 317a, 317b), wherein there are means which during the opening and/or closing movements of the mold portions also permit displacement of the blow molding mold in a direction parallel to the opening and/or closing movements of the mold portions and said means are in the form of a drive system (31, 38; 131, 138; 238; 338) which is used in addition to the drive system (17; 117a, 117b; 217a, 217b; 317a, 317b) for producing the opening and closing movements.

21. Apparatus according to claim 20 characterised in that the additional drive system (31; 131) is connected to the blow molding machine (4; 104) and one of the mold portions (10a; 110b).

22. Apparatus according to claim 20 characterised in that the blow molding mold has at least one connecting element (25; 125; 228a; 390) of a synchronisation arrangement (30; 130; 230; 330), which connecting element kinematically connects the mold portions (10a, 10b; 110a, 110b; 210a, 210b; 310a, 310b) and is arranged on the blow molding machine and whose position or effective length is adjustable.

23. Apparatus according to claim 22 characterised in that the additional drive system (38; 138; 238; 338) is connected to the blow molding machine (4; 104; 204, 304) and the at least one connecting element (25; 125; 228a; 390) of the synchronisation arrangement (30, 130; 230, 330).

24. Apparatus for the production of hollow bodies of thermoplastic material by means of blow molding, having a blow molding mold which has at least two mold portions (110a, 110b) which are reciprocable between an open condition in which they are at a spacing from each other and a closed condition in which they bear against each other and define a mold cavity, by means of a drive system (117a, 117b), wherein the drive system for the opening and closing movements of the mold portions (110a, 110b) for each mold portion has a separate hydraulic drive means (117a, 117b), and there are means which during the opening and/or closing movements of the mold portions also permit displacement of the blow molding mold in a direction parallel to the opening and/or closing movements of the mold portions and said means are in the form of distributor valves (172, 173) for distribution of the total amount of hydraulic operating fluid supplied to or displaced from the hydraulic drive means (117a, 117b).

25. Apparatus according to claim 24 characterised in that the blow molding mold includes at least one connecting element (125) of a synchronisation arrangement (130), which connecting element kinematically connects the mold portions (110a, 110b) and is arranged on the blow molding machine and whose position or effective length is adjustable.

26. Apparatus according to claim 22 or claim 25 characterised in that the said at least one connecting element of the synchronisation arrangement, which is adjustable in respect of position or effective length, is arranged fixably in respect of its position or effective length.

27. Apparatus according to claim 22 or claim 25 characterised in that the at least one connecting element (25; 125; 228a; 390) of the synchronisation arrangement, which is adjustable in respect of position or effective length, is connected to a measuring pick-up means (37; 137; 237; 337) for detecting the displacement of the mold.

28. Apparatus according to claim 22 or claim 25 characterised in that the adjustable connecting element (25; 125) of the synchronisation arrangement (30; 130) is in the form of a displaceably mounted gear (25; 125) co-operating with two toothed racks connected to respective ones of the mold portions (10a, 10b; 110a, 110b).

29. Apparatus according to claim 22 or claim 25 characterised in that the adjustable connecting element is in the form of a displaceably mounted control lever (81) of a lever system (81, 83a, 83b) whose lever rods (83a, 83b) are connected to respective ones of the two mold portions (10a, 10b).

30. Apparatus according to claim 22 or claim 25 characterised in that the adjustable connecting element (228a) is connected to one (210a) of the two mold portions, with the interposition of means (238) permitting a variation in the effective length of the connecting element (228a).

31. Apparatus according to claim 30 characterised in that the means (238) permitting the variation in the effective length is in the form of a piston (240) which is guided in a cylinder (235) and whose piston rod (236) carries or forms the connecting element.

32. Apparatus according to claim 31 characterised in that the connecting element which is adjustable in respect of its effective length is in the form of a toothed rack (228a) meshing with a gear (225).

33. Apparatus according to claim 31 characterised in that the connecting element (228a) which is adjustable in respect of its effective length is connected to an endless flexible connecting element (230) which passes around two spaced-apart guide wheels or like guide members (226a, 226b).

34. Apparatus according to claim 22 or claim 25 characterised in that the connecting element which is adjustable in respect of effective length is in the form of a rack (390) meshing with two gears (325a', 325b') whose rotational movements are derived from the movements of the mold portions (310a, 310b), and the rack (390) is provided in the region between the two gears (325a', 325b') with means (338) which permit a variation in the length of the rack (390).

35. Apparatus according to claim 34 characterised in that the means permitting adjustment of the length of the rack (390) are in the form of a piston-cylinder unit (338).

36. Apparatus according to claim 20 or claim 24 characterised in that it is provided with a travel pick-up means (50; 150; 250) for detecting the spacing of the mold portions (10a, 10b; 110a, 110b; 210a, 210b) or the carrier plates thereof (12a, 12b; 112a, 112b; 212a, 212b) from each other.

37. Apparatus according to claim 20 or claim 24 characterised in that there is at least one programmer (60; 160; 260) into which are inputted the sdeparate travel-time characteristics and/or the separate speed characteristics (A(t), B(t)) of the mold portions (10a, 10b; 110a, 110b; 210a, 210b) during the closing and/or opening movements relative to a reference plane (9; 109; 209).

38. Apparatus according to claim 37 characterised in that the at leaast one programmer (60; 160; 260) is connected to at least one calculating unit (62; 162; 262) which in dependence on the time-travel characteristics of the mold portions (10a, 10b; 110a, 110b; 210a, 210b) determines the distance-time characteristic (S(t)) and/or the speed characteristic of the mold portions (10a, 10b; 110a, 110b; 210a, 210b) relative to each other.

39. Apparatus according to claim 37 characterised in that the at least one programmer (60; 160; 260) is connected to at least one calculating unit (64; 164; 264) which in dependence on the travel-time characteristics of the mold portions (10a, 10b; 110a, 110b; 210a, 210b) determines the distance-time characteristic (V(t)) and/or the speed characteristic of the central plane of the mold portions (10a, 10b; 110a, 110b; 210a, 210b), in relation to which the mold portions move similarly in opposite relationship, relative to a reference plane (9; 109; 209) of the blow molding machine.

40. Apparatus according to claim 37 characterised in that there are provided respective programmers (60; 160; 260) for the closing movements and the opening movements of the mold portions (10a, 10b; 110a, 110b; 210a, 210b).

41. Apparatus according to claim 37 characterised in that the programmer for the closing movements of the mold portions (10a, 10b; 110a, 110b; 210a, 210b; 310a, 310b) comprises at least two program sections of which the program section associated with the end phase of the closing movement contains the presetting data in respect of the requirements for the formation of a welded seam and/or for squeezing off waste material.

42. Apparatus according to claim 41 characterised in that interposed between the program section associated with the end phase of the mold portion closing movement and the preceding freely settable program section is an intermediate program section which serves to determine the movements of the mold portions (10a, 10b; 110a, 110b; 210a, 210b; 310a, 310b) between their respective position at the end of the preceding program section and the respective position of the mold portions at the beginning of the program section associated with the end phase of the closing movement.

## Revendications

1. Procédé pour fabriquer des corps creux en matière thermoplastique moulée par soufflage, en opérant avec un moule de soufflage formé d'au moins deux parties mobiles (10a,10b; 110a,110b; 210a,210b; 310a,310b) et adapté à recevoir une ébauche de moulage pour transformer celle-ci par expansion, un système de manoeuvre (17; 117a,117b; 217a,217b; 317a,317b) étant prévu pour commander les mouvements alternés d'ouverture et/ou de fermeture des parties du moule de soufflage, entre une position d'ouverture où ces parties sont écartées l'une de l'autre, et une position de fermeture où ces parties mobiles sont appliquées l'une contre l'autre, de manière à définir entre elles une cavité de moulage dont la forme correspond à celle que l'on veut donner par expansion à l'ébauche sous l'effet d'une surpression interne, caractérisé en ce que l'on communique au moule de soufflage un mouvement de décalage au moins temporaire, au besoin pendant les manoeuvres d'ouverture et/ou de fermeture des parties mobiles (10a,10b; 110a,110b; 210a,210b; 310a,310b) du moule, en commandant ce mouvement de décalage au moyen d'un système moteur auxiliaire (31,38; 131,138; 238; 338) prévu pour intervenir en complément du système de manoeuvre (17; 117a,117b; 217a,217b; 317a,317b) qui assure les mouvements d'ouverture et/ou de fermeture des parties mobiles du moule de soufflage, ce mouvement de décalage de l'ensemble du moule de soufflage étant orienté parallèlement au mouvement de fermeture et/ou d'ouverture des parties du moule, de manière à introduire une dissymétrie au moins temporaire dans ces mouvements, par rapport à un plan de référence (9; 109; 209; 309) de la machine à mouler par soufflage.

2. Procédé selon la revendication 1, caractérisé en ce que l'on associe cinématiquement l'une à l'autre les parties mobiles (10a,10b; 110a,110b; 210a,210b; 310a,310b) du moule de soufflage, au moyen d'un élément de liaison (25; 125; 228a; 390) d'un système de conjugaison (30; 130; 230; 330), et en ce que l'on fait varier, au moins temporairement, la position ou la longueur utile de cet élément de liaison, pour réaliser le décalage du moule de soufflage.

3. Procédé selon la revendication 2, caractérisé en ce que l'on affecte aux mouvements d'ouverture et/ou de fermeture de chacune des parties mobiles du moule des valeurs de consigne au moins temporaires, pour définir en fonction du temps un programme de variation des déplacements [A(t), B(t)] et/ou un programme de variation des vitesses, par rapport à un plan de référence (9; 109; 209; 309) de la machine à mouler, en ce que l'on détermine par le calcul le programme de variation en fonction du temps qui en résulte pour l'écartement des parties mobiles du moule - l'une par rapport à l'autre - et/ou pour la vitesse de chacune de ces parties, pour obtenir des valeurs de consigne du fonctionnement du système de manoeuvre (17; 117a,117b; 217a,217b; 317a,317b) qui commande les mouvements d'ouverture et de fermeture du moule, en ce que l'on fait agir le système moteur auxiliaire (38; 138; 238; 338) qui commande la variation de position ou de longueur utile de chaque élément de liaison réglable (25; 125; 228a; 390) du système de conjugaison (30; 130; 230; 330), en imposant à ce système moteur auxiliaire des valeurs de consigne pour le mouvement de décalage, déduites des variations en fonction du temps de l'amplitude de déplacement et/ou de la vitesse de chaque partie mobile du moule - par rapport au plan de référence - en fonction des variations de la course [V(t)] et/ou de la vitesse du plan médian des deux parties mobiles du moule, par rapport auquel ces deux parties effectuent des mouvements symétriques.

4. Procédé selon la revendication 1, caractérisé en ce que l'on prévoit pour chacune des parties mobiles du moule (10a,10b; 110a,110b) un régime de mouvement au moins temporaire d'ouverture et/ou de fermeture, fixant séparément les variations de la course [A(t), B(t)] et/ou de la vitesse de chaque partie par rapport à un plan de référence (9; 109) de la machine à mouler; en ce que l'on détermine par calcul les variations qui en résultent en fonction du temps l'écartement [S(t)] et/ou pour la vitesse des parties du moule l'une par rapport à l'autre, afin d'imposer ces données de consigne au système de manoeuvre (31; 131) qui commande l'ouverture et/ou la fermeture, le système moteur auxiliaire qui commande le décalage étant monté entre le bâti (104) de la machine à mouler et l'une des parties (10a; 110b) du moule de soufflage, et en ce que l'on soumet le fonctionnement de ce système moteur auxiliaire (31; 131) au régime de consigne résultant des variations ainsi prévues en fonction du temps pour la course [ A(t), B(t) ] et/ou la vitesse de la partie du moule en question.

5. Procédé selon la revendication 2, caractérisé en ce que le système de manoeuvre qui commande les mouvements d'ouverture et de fermeture des parties (110a,110b; 210a,210b; 310a,310b) du moule comporte un organe moteur hydraulique séparé (117a,117b; 217a,217b; 317a,317b) pour chacune de ces parties, en ce que l'on soumet séparément et au moins temporairement les mouvements de chaque partie du moule à un régime évolutif de consigne [A(t), B(t)] pendant les manoeuvres de fermeture et/ou d'ouverture, et en ce que l'on fait fonctionner en conséquence le système moteur auxiliaire - d'après les variations qui en résultent pour l'écartement réciproque des parties du moule - en réglant le débit instantané du liquide hydraulique envoyé sous pression au système moteur auxiliaire, le mouvement de décalage du moule de soufflage étant ainsi réalisé en faisant varier la position ou la longueur utile de chaque élément de liaison réglable (125; 228a; 390) du système de conjugaison, le débit total de liquide sous pression envoyé au système principal de manoeuvre étant ainsi réparti entre chaque organe moteur (117a,117b; 217a, 217b; 317a,317b) de ce système, en fonction de la variation de la position ou de la longueur utile de chaque élément réglable (125; 228a; 390) du système de conjugaison.

6.  Procédé selon l'une des revendications précédentes, caractérisé en ce que l'on mesure la valeur instantanée de la variation effective de position ou de longueur utile de chaque élément réglable (25; 125; 228a; 390) du système de conjugaison (30; 130; 230; 330), pour comparer cette valeur instantanée à la valeur de consigne fixée pour le mouvement de décalage du moule, et en ce que l'on règle le fonctionnement des organes moteurs auxiliaires (38; 138; 238; 338) qui assurent le mouvement de décalage du moule, en fonction de l'écart constaté entre la valeur instantanée et la valeur de consigne en question.

7.  Procédé pour fabriquer des corps creux en matière thermoplastique moulée par soufflage, en opérant avec un moule de soufflage formé d'au moins deux parties mobiles (110a,110b) et adapté à recevoir une ébauche de moulage pour transformer celle-ci par expansion, un système de manoeuvre (117a,117b) étant prévu pour commander les mouvements alternés d'ouverture et/ou de fermeture des parties du moule, entre une position d'ouverture où ces parties sont écartées l'une de l'autre, et une position de fermeture où ces parties mobiles du moule sont appliquées l'une contre l'autre, de manière à définir entre elles une cavité de moulage dont la forme correspond à celle que l'on veut donner par expansion à l'ébauche sous l'effet d'une surpression interne, caractérisé en ce que l'on communique au moule un mouvement de décalage au moins temporaire, au besoin pendant les manoeuvres d'ouverture et/ou de fermeture des parties (110a,110b) du moule, ce mouvement de décalage étant orienté parallèlement aux mouvements de fermeture et/ou d'ouverture des parties du moule, en ce que l'on prévoit pour chaque partie mobile (110a,110b) du moule un organe moteur auxiliaire séparé (117a,117b) de type hydraulique, en ce que l'on soumet chaque partie du moule - au moins temporairement - pendant ses mouvements de fermeture et/ou d'ouverture à un régime de consigne séparé, fixant les variations en fonction du temps de la course [A(t), B(t)] de chaque partie, et/ou la vitesse de celle-ci, et en ce que l'on règle l'évolution qui en résulte en fonction du temps pour l'écartement relatif des parties mobiles du moule, et/ou pour leurs vitesses respectives, en agissant sur le réglage du débit total de liquide sous pression envoyé à chaque instant aux organes moteurs (117a,117b) du système de manoeuvre principal, le décalage à imposer au moule étant réalisé en assurant une répartition inégale du débit de liquide sous pression entre chacun des organes moteurs (117a,117b) du système de manoeuvre du moule, de manière à introduire une dissymétrie au moins temporaire dans les mouvements des parties du moule de soufflage par rapport à un plan de référence (109) de la machine à mouler.

8.  Procédé selon la revendication 7, caractérisé en ce que l'on détermine d'abord le débit total de liquide sous pression nécessaire pour les mouvements de fermeture et d'ouverture des parties (110a,110b) du moule, pour répartir ensuite ce débit entre les organes moteurs (117a,117b) du système de manoeuvre.

9.  Procédé selon la revendication 7, caractérisé en ce que l'on associe cinématiquement l'une à l'autre les parties (110a,110b) du moule de soufflage au moyen d'au moins un élément de liaison (125) d'un système de conjugaison (130), l'un au moins des éléments de liaison comportant des moyens de réglage pour faire varier sa position ou sa longueur utile pendant le mouvement de décalage au moins temporaire du moule.

10. Procédé selon la revendication 2, caractérisé en ce que l'on mesure la variation instantanée de position ou de longueur utile de chaque élément réglable (125) du système de conjugaison accompagnant le mouvement de décalage du moule, pour comparer cette variation instantanée avec la valeur de consigne prévue pour le mouvement de décalage du moule, et en ce que l'on règle, entre les organes moteurs séparés (117a,117b) du système de manoeuvre, la répartition du débit de liquide hydraulique sous pression, en fonction de l'écart constaté entre cette variation instantanée et la valeur de consigne correspondante.

11. Procédé selon l'une des revendications précédentes, caractérisé en ce que l'on impose séparément aux mouvements d'ouverture et de fermeture de chacune des parties du moule des régimes évolutifs en fonction du temps pour les courses [A(t), B(t)] de ces parties mobiles et/ou pour leurs vitesses.

12. Procédé selon l'une des revendications précédentes, caractérisé en ce que l'on assure les mouvements résultants des parties (10a,10b; 110a,110b;

212a,210b; 310a,310b) du moule en fonction d'un programme dans lequel on a introduit comme données de consigne les variations en fonction du temps des courses [A(t), B(t)] pour en tirer les valeurs de consigne définissant les variations de l'écartement relatif [S(t)] des parties du moule, et le cas échéant les variation du décalage [V(t)] du plan médian des parties du moule par rapport au plan de référence (9; 109; 209; 309).

13. Procédé selon l'une des revendications précédentes, caractérisé en ce que l'on réalise, pour les mouvements des parties (10a,10b; 110a,110b; 210a,210b; 310a,310b) du moule en fin de fermeture, des variations de course et/ou de vitesse favorables pour assurer la confection d'un cordon de soudure et/ou pour sectionner par écrasement la matière plastique en excès.

14. Procédé selon la revendication 13, caractérisé en ce que, à la fin de la phase de fermeture du moule, on commande les mouvements des parties (10a,10b; 110a,110b; 210a,210b; 310a,310b) du moule d'une manière symétrique par rapport à un organe de la machine - tel qu'un mandrin - qui coopère avec le moule, sans participer aux mouvements de fermeture et d'ouverture.

15. Procédé selon la revendication 13, caractérisé en ce que l'on commande les mouvements des parties (10a,10b; 110a,110b; 210a,210b; 310a,310b) du moule à la fin de la phase de fermeture, en fonction d'une partie d'un programme fixant les mouvements de fermeture, après avoir introduit dans cette partie du programme les données de consigne nécessaires pour la confection d'un cordon de soudure et/ou le sectionnement de la matière en excès, par écrasement.

16. Procédé selon la revendication 2 ou 9, caractérisé en ce que l'on prévoit un dispositif de verrouillage pour chaque élément de liaison (25; 125; 228a; 390) du système de conjugaison (30; 130; 230; 390) dont on peut faire varier la position ou la longueur utile, pour verrouiller cet élément lorsqu'aucun mouvement de décalage n'est prévu pour le moule.

17. Procédé selon l'une des revendications précédentes, caractérisé en ce que l'on réalise le mouvement de décalage du moule, alors que celui-ci est fermé et/ou complètement ouvert.

18. Procédé selon l'une des revendications précédentes, caractérisé en ce que l'on effectue le mouvement de décalage du moule, alors que les parties mobiles (10a,10b; 110a,110b; 210a,210b; 310a,310b) du moule se trouvent dans une position intermédiaire, entre leur ouverture complète et leur fermeture complète, et que l'on a interrompu provisoirement la variation de l'écartement relatif entre ces parties mobiles.

19. Procédé selon l'une des revendications précédentes, caractérisé en ce que l'on prend comme plan de référence de la machine à mouler le plan médian (9; 109; 209; 309) de l'ébauche (24; 124; 224) qui se trouve en position de réception.

20. Machine pour fabriquer des corps creux en matière plastique moulée par soufflage, comportant un moule de soufflage pourvu d'au moins deux parties mobiles (10a,10b; 110a,110b; 210a,210b; 310a,310b), adaptées à se déplacer en va-et-vient sous l'action d'un système de manoeuvre (17; 117a,117b; 217a,217b; 317a,317b), entre une position d'ouverture où existe un écartement relatif entre ces parties mobiles, et une position de fermeture où ces deux parties sont appliquées l'une contre l'autre pour définir entre elles une cavité de moulage, caractérisé en ce quelle comporte des moyens pour communiquer un mouvement de décalage au moule, même pendant les mouvements d'ouverture et/ou de fermeture des parties mobiles de celui-ci, et parallèlement à ces mouvements, ces moyens étant constitués par un système moteur auxiliaire (31,38; 131,138; 238; 338) qui agit en supplément du système de manoeuvre (17; 117a,117b; 217a,217b; 317a,317b) des parties mobiles du moule, prévu pour assurer les mouvements d'ouverture et de fermeture de celui-ci.

21. Machine selon la revendication 20, caractérisée en ce que le système moteur auxiliaire (31; 131) est monté entre le bâti de la machine à mouler (4; 104) et l'une des parties mobiles (10a; 110b) du moule.

22. Machine selon la revendication 20, caractérisée en ce que le moule comporte au moins un élément de liaison (25; 125; 228a; 390) d'un système de conjugaison (30; 130; 230; 330), prévu pour relier cinématiquement l'une à l'autre les parties mobiles (10a,10b; 110a,110b; 210a,210b; 310a,310b) du moule, cet élément étant monté sur la machine à mouler, et pourvu d'un dispositif permettant d'en faire varier la position ou la longueur utile.

23. Machine selon la revendication 22, caractérisée en ce que le système moteur auxiliaire (38; 138; 238; 338) est monté entre le bâti de la machine à mouler (4; 104; 204; 304) et chacun des élément de liaison (25; 125; 228a; 390) du système de conjugaison (30; 130; 230; 330).

24. Machine pour fabriquer des corps creux en matière thermoplastique moulée par soufflage, comportant un moule de soufflage pourvu de deux parties mobiles (110a,110b) associées à un système de manoeuvre (117a,117b) prévu pour communiquer à ces deux parties mobiles des mouvements de va-et-vient, entre une position d'ouverture où existe un écartement relatif entre ces parties, et une position de fermeture où ces parties sont appliquées l'une contre l'autre de manière à définir une cavité de moulage, caractérisé en ce que le système de manoeuvre assurant les mouvements d'ouverture et de fermeture des parties (110a,110b) du moule comporte pour chacune de ces parties un organe moteur séparé de type hydraulique (117a,117b), des moyens étant prévus pour agir même pendant les mouvements d'ouverture et/ou de fermeture des parties du moule, afin de communiquer au moule un mouvement de décalage dans une direction parallèle aux mouvements d'ouverture et/ou de fermeture des parties du moule, ces moyens de décalage étant constitués par des soupapes de répartition (171,173), prévues pour partager le débit total du liquide hydraulique envoyé sous pression aux organes moteurs hydrauliques (117a,117b) du système moteur auxiliaire, ou pour partager le débit refoulé par ces organes moteurs.

25. Machine selon la revendication 24, caractérisée en ce que le moule comporte au moins un élément de liaison (125) d'un système de conjugaison (130), prévu pour relier cinématiquement l'une à l'autre les parties mobiles (110a,110b) du moule, cet élément de liaison étant monté sur la machine à mouler et associé à un dispositif prévu pour en faire varier la position ou la longueur utile.

26. Machine selon la revendication 22 ou 25, caractérisée en ce que chaque élément de liaison du système de conjugaison, dont on peut faire varier la position ou la longueur utile, comporte des moyens de verrouillage de sa position ou de sa longueur utile.

27. Machine selon la revendication 22 ou 25, caractérisée en ce que chaque élément de liaison (25; 125; 228a; 390) du système de conjugaison (30; 130; 230; 330) dont on peut faire varier la position ou la longueur utile est relié à un capteur de déplacement (37; 137; 237; 337), adapté à mesurer l'amplitude du décalage du moule.

28. Machine selon la revendication 22 ou 25, caractérisée en ce que l'élément de liaison réglable (25; 125) du système de conjugaison (30; 130) est constitué par un pignon à montage coulissant (25; 125), qui coopère avec deux crémaillères fixées chacune à l'une des parties mobiles (10a,10b; 110a,110b) du moule.

29. Machine selon la revendication 22 ou 25, caractérisée en ce que l'élément de liaison réglable est constitué par un lever oscillant (81) à montage coulissant d'un système de leviers (81; 83a,83b), qui comporte des belles de liaison (83a,83b) articulées chacune sur l'une des deux parties mobiles (10a,10b) du moule.

30. Machine selon la revendication 22 ou 25, caractérisée en ce que l'élément de liaison réglable (228a) est relié à l'une des deux parties mobiles (210a) du moule par l'intermédiaire d'un dispositif (238) qui permet de faire varier la longueur utile de cet élément de liaison (228a).

31. Machine selon la revendication 30, caractérisée en ce que le dispositif (238) prévu pour faire varier la longueur utile de l'élément de liaison (228a) est constitué par un vérin dans le corps (235) duquel est monté un piston (240) dont la tige (236) porte l'élément de liaison, ou constitue cet élément.

32. Machine selon la revendication 31, caractérisée en ce que l'élément de liaison dont la longueur utile est réglable est constitué par une crémaillère (228a) sur laquelle est en prise un pignon (225).

33. Machine selon la revendication 31, caractérisée en ce que l'élément de liaison (228a) dont on peut faire varier la longueur utile est relié à un autre élément de liaison souple et formant une boucle sans fin (230) qui passe sur deux poulies de renvoi écartées l'une de l'autre (226a,226b) ou sur deux organes de guidage analogues.

34. Machine selon la revendication 22 ou 25, caractérisée en ce que l'élément de liaison dont on peut faire varier la longueur utile est constitué par une crémaillère (390), sur laquelle sont en prise deux pignons (325a',325b') dont les mouvements de rotation sont commandés par les mouvements des parties mobiles (310a,310b) du moule, et en ce que la crémaillère (390), dans sa partie située entre les deux pignons (325a',325b'), est pourvue de moyens (338) pour assurer une variation de longueur de la crémaillère.

35. Machine selon la revendication 34, caractérisée en ce que les moyens prévus pour assurer une variation de longueur de la crémaillère (390) sont constitués par un vérin (338).

36. Machine selon la revendication 20 ou 24, caractérisée en ce qu'elle comporte un capteur de déplacement (50; 150; 250), pour mesurer l'écartement relatif des parties mobiles (10a,10b; 110a,110b; 210a,210b) du moule, ou des plaques-supports (12a,12b; 112a,112b; 212a,212b) de ces parties mobiles.

37. machine selon la revendication 20 ou 24, caractérisée en ce qu'elle comporte au moins un programmateur (60; 160; 260) dans lequel on peut introduire les données de consigne fixant les régimes évolutifs séparés des mouvements des parties (10a,10b; 110a,110b; 210a,210b) du moule, pour définir les courses de ces parties mobiles et/ou leurs vitesses [A(t), B(t)] pendant leurs mouvements de fermeture et/ou d'ouverture, par rapport à un plan de référence (9; 109; 209).

ture.

**38.** Machine selon la revendication 37, caractérisée en ce que chacun des programmateurs (60; 160; 260) est relié à au moins une unité de calcul (62; 162; 262) qui détermine en fonction du temps les valeurs de consigne de l'écartement relatif [S(t)] des parties mobiles (10a,10b; 110a,110b; 210a,210b) du moule de soufflage, et/ou les valeurs de consigne des vitesses relatives de ces parties mobiles, d'après les programmes qui définissent en fonction du temps les courses des mouvements de ces mêmes parties mobiles.

**39.** Machine selon la revendication 37, caractérisée en ce que chaque programmateur (60; 160; 260) est relié à au moins une unité de calcul (64; 164; 264) qui détermine, d'après les courses des parties mobiles (10a,10b; 110a,110b; 210a,210b) en fonction du temps, les variations en fonction du temps, du décalage [V(t)] et/ou de la vitesse du plan médian de ces mêmes parties mobiles, par rapport à un plan de référence (9; 109; 209) de la machine à mouler.

**40.** Machine selon la revendication 37, caractérisée en ce que chaque programmateur (60; 160; 260) est prévu pour les mouvements de fermeture et d'ouverture des parties (10a,10b; 110a,110b; 210a,210b) du moule.

**41.** Machine selon la revendication 37, caractérisée en ce que le programmateur qui commande les mouvements de fermeture des parties (10a,10b; 110a,110b; 210a,210b) du moule comporte un programme en au moins deux stades, et en ce que le stade du programme qui correspond à la fin du mouvement de fermeture contient les données nécessaires pour la réalisation d'un joint soudé et/ou le sectionnement par écrasement de la matière plastique en excès.

**42.** Machine selon la revendication 41, caractérisée en ce que, entre la phase du programme qui correspond à la fin de la manoeuvre de fermeture et la phase précédente qui est réglable à volonté, on prévoit une phase intermédiaire pour définir les mouvements de chacune des parties (10a,10b; 110a,110b; 210a,210b; 310a,310b) du moule, entre leur position à la fin de la première phase du programme et leur position au début de la dernière phase du programme de la manoeuvre de ferme-

FIG.1

EP 0 481 259 B1

FIG.2

EP 0 481 259 B1

FIG.3

EP 0 481 259 B1

FIG.4

EP 0 481 259 B1

FIG.5

EP 0 481 259 B1

FIG.6

EP 0 481 259 B1

FIG.7

FIG.8

FIG. 9

EP 0 481 259 B1

FIG.10

EP 0 481 259 B1

10a (110a, 210a, 310a)

10b (110b, 210b, 310b)

9 (109, 209, 309)

(−)　　　　0　　　　　　　　　　　　　(+)

V(t)　　　B(t)　　　S(t)　　　I

II

III

A(t)　　　　　　　　　　　　　　　　IV

V

VI

t

FIG.11

10a (110a, 210a, 310a)　　　　10b (110b, 210b, 310b)

FIG.12